(19) Europäisches Patentamt
European Patent Office
Office européen des brevets

(11) **EP 4 762 895 A1**

(12) **EUROPEAN PATENT APPLICATION**

(43) Date of publication:
**24.06.2026 Bulletin 2026/26**

(21) Application number: **25224426.4**

(22) Date of filing: **17.12.2025**

(51) International Patent Classification (IPC):
**A01B 69/04** (2006.01)   **G05D 1/646** (2024.01)
**G05D 1/672** (2024.01)

(52) Cooperative Patent Classification (CPC):
**A01B 69/008; G05D 1/646; G05D 1/672;**
G05D 2105/15; G05D 2107/21; G05D 2109/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024 GB 202418795**

(71) Applicant: **J.C. Bamford Excavators Limited
Uttoxeter Staffordshire ST14 5JP (GB)**

(72) Inventors:
• **Sutton, Thomas
Uttoxeter, ST14 5JP (GB)**
• **Helmick, Lawrence
Uttoxeter, ST14 5JP (GB)**
• **Swinnerton, Peter
Uttoxeter, ST14 5JP (GB)**

(74) Representative: **McGeough, Gemma Ann
Withers & Rogers LLP
2 London Bridge
London SE1 9RA (GB)**

(54) **CONTROL SYSTEM FOR A WORKING MACHINE WITH FRONT AND/OR REAR IMPLEMENTS AND ADAPTIVE GUIDANCE PATH ACQUISITION**

(57)     The present invention relates to a control system (18) for a working machine (10), wherein the working machine is configured to be fitted with a front implement (24) and/or a rear implement (26). The control system is configured to: obtain or determine a guidance path (28), wherein the guidance path defines a path to be tracked by the machine (10). Based on implement information, the control system is configured to obtain or determine an acquisition path (30) that is derived an implement acquisition path (29a, 29b). The vehicle is controlled to move along said acquisition path in accordance with the implement information, in order to position the machine to track the guidance path.

FIG. 3c

EP 4 762 895 A1

**Description**

FIELD

The present teachings relate to a control system for a working machine, particularly but not exclusively for an agricultural working machine. The present teachings also relate to a working machine comprising said control system.

BACKGROUND

In agricultural farming applications today, precision farming is a necessity to ensure optimal yield and reduced cost. Some machines are known to be fitted with a navigation controller allowing the machine to be autonomously steered to track a desired guidance path.

In precision farming applications, it is essential that the desired guidance path which is to be followed is tracked to a high degree of accuracy. Furthermore, it is important that any operator selections to track new paths or trajectories are actioned in an efficient manner to ensure that the working point of an implement fitted to the machine is in position with respect to the path as quickly as possible.

The present disclosure seeks to overcome or at least mitigate problems of the prior art, for example in relation to precision farming applications.

SUMMARY

The present teachings provide a control system according to the appended claims 1 to 24.

An aspect of the present teachings provides a control system for a working machine. The working machine may be configured to be fitted with a front implement towards a front of the machine and/or a rear implement towards a rear of the machine. The control system may be configured to:

    obtain or determine a guidance path, wherein the guidance path defines a path to be tracked by the machine;

    obtain or determine implement information in relation to the front implement and/or the rear implement; and/or

    direct positioning of the machine in accordance with the implement information, in order to position the machine to track the guidance path.

In this way, the working machine may be controlled to navigate the working machine to a position in which it can track the guidance path. This process is often termed "acquiring" the guidance path.

When fitted with front and/or rear implements, it can be difficult for a working machine to be steered such that the front and/or rear implements are appropriately placed with respect to a guidance path. For example, in some situations, whilst the working machine may be following the guidance path, one or other of the front and rear implements may not be in the optimal position for completing the required task. This can lead to suboptimal performance of the working machine when completing a given task.

By directing positioning of the machine in accordance with the implement information, the control system can direct the position of the machine in the most appropriate way for the implements fitted, e.g. to maintain stability, ensure optimal operating conditions of the implements, ensure optimal positioning of the implements etc.

In some embodiments, the implement information may be input by an operator.

Optionally, wherein the implement information is indicative of a position of the front implement and/or a position of the rear implement with respect to the machine.

In this way, the machine can be positioned such that the position of the front and/or rear implement with respect the guidance path can be optimised. Since the front and rear implements are the working parts of the machine, optimising the position of the respective implement has the effect of enhancing precision of the working machine when completing a given task.

In precision farming applications, it is important that any instruction to the working machine to track a guidance path is actioned in an efficient manner, in order to position the working machine (in particular a working point of the working machine) on the guidance path in the shortest distance possible.

By directing positioning of the machine in accordance with the implement information, that relates to the position of the front and/or rear implements with respect to the working machine, positioning of the machine can be controlled so to optimise the position of the respective implement. Since the implements comprise the working portions of the machine, precise positioning of the implements is important for maximising performance of the working machine in completing a given task.

For example, the implement information may be indicative of a position of the front implement and/or a position of the rear implement with respect to the front axle and/or rear axle respectively.

It will be appreciated that one or both of the front and/or rear implements may be provided in an offset position with respect to a longitudinal axis of the working machine.

In some embodiments, the implement information may be indicative of a weight distribution of the respective implement. In such instances, the control system may be configured to direct positioning of the machine such that stability of the machine is maintained, in view of the weight distribution of the machine and implement(s).

Optionally, wherein the implement information comprises information relating to an implement priority input (e.g. a user input), wherein the implement priority input is indicative of whether a position, with respect to the guidance path, of the front implement, the rear implement, or both the front implement and the rear implement is to be prioritised, and wherein the control system is configured to receive the implement priority input.

In this way, priority can be given to the implement that is most important e.g. for completion of a given task. In some cases, both the front and the rear implements can be prioritised when the positions of the front and rear implements with respect to the guidance path are both important, e.g. for completion of a given task.

In some embodiments, the implement priority input may be user selected.

Optionally, wherein the control system is configured to direct positioning of the machine such that:

    a. positioning of the front implement to track the guidance path is prioritised when the implement priority input indicates that the position of the front implement is to be prioritised;

    b. positioning of the rear implement to track the guidance path is prioritised when the implement priority input indicates that the position of the rear implement is to be prioritised; and/or

    c. positioning of both the front implement and rear implement to respectively track the guidance path is prioritised when the implement priority input indicates that the position of both the front implement and rear implement is to be prioritised.

Optionally, wherein the control system is configured to direct positioning of the machine by controlling a position of a front axle and/or rear axle of the machine.

In this way, the control system is configured to control a location of the front axle and/or to control a location of the rear axle in order to direct positioning of the working machine. This contrasts with some known systems in which a position of the working machine is controlled by controlling a position of a centrepoint of the machine. The centrepoint of the machine may be the midpoint of the machine in both lateral and longitudinal directions.

In precision farming applications, it is important that any instruction to the working machine to track a guidance path is actioned in an efficient manner, in order to position the working machine (in particular a working point of the working machine) on the guidance path in the shortest distance possible.

By controlling a position of the front axle and/or a position of the rear axle, more precise positioning of the front and/or rear axles can be achieved. Consequently, more precise positioning of the working machine as a whole can be achieved.

In some embodiments, the machine is fitted with a front implement, since the front implement is likely to be positioned proximal the front axle, more precise positioning of the front implement (i.e. a working point of the machine) can be achieved by controlling the position of the front axle.

In some embodiments, the machine is fitted with a rear implement, since the rear implement is likely to be positioned proximal the rear axle, more precise positioning of the rear implement (i.e. a working point of the machine) can be achieved by controlling the position of the rear axle.

Accordingly, more precise positioning of the front and/or rear implements can be achieved. Since the implements comprise the working portions of the machine, precise positioning of the implements is important for maximising performance of the working machine in completing a given task.

Furthermore, by controlling the front and/or rear axles, the position of respective front and/or rear wheels can be more accurately controlled, for example as compared to where a position of a centrepoint of the machine is controlled. It will be appreciated, that the front and rear wheels are the portions of the machine that impact the ground and so precise positioning of the wheels is important to ensure they impact the ground at a desired location, e.g. avoiding crops or other areas of the ground that could be damaged when driven on.

In some embodiments, the front axle is coupled to a pair of front wheels. In some embodiments, the rear axle is coupled to a pair of rear wheels.

Optionally, wherein the control system is configured to direct independently a position of the front axle and a position of the rear axle.

In other words, the control system is configured to control the position of the front axle independently of the position of the rear axle and vice versa. This enables the control system to independently direct the position of the respective implement (when present), which facilitates more precise positioning of the respective implement.

Optionally, wherein the control system is configured to:

obtain or determine an acquisition path, wherein the acquisition path defines a path for the machine to follow in order to position the machine to track the guidance path, wherein the acquisition path is calculated in accordance with the implement information; and

to direct positioning of the machine by directing the machine to follow the acquisition path.

In this way, the working machine may be controlled to follow a trajectory (e.g. an optimal trajectory) in order to navigate the working machine to a position in which it can track the guidance path. This process is often termed "acquiring" the guidance path.

This trajectory is optimised in accordance with the implement information, such that positioning of the front, rear or both implements (when present) can be optimised.

For example, the working machine may be instructed, e.g. by an operator, to track a guidance path. In order to do so, the control system obtains or determines an acquisition path and directs the machine to follow the acquisition path. In doing so, the machine is located in a position in which it is able to track the guidance path.

In precision farming applications, it is important that any instruction to the working machine to track a guidance path is actioned in an efficient manner, in order to position the working machine (in particular a working point of the working machine) on the guidance path in the shortest distance possible.

By directing positioning of the working machine in accordance with an acquisition path, more predictable steering of the working machine can be achieved. In other words, by calculating an acquisition path, improved repeatability of how the machine is controlled can be achieved. This is advantageous to the operator in providing more predictable and precise operation of the working machine.

The acquisition path may be calculated based on a number of variables, for example user selected variables. Accordingly, having a control system that obtains or determines an acquisition path and then uses this to direct the working machine enables such variables to be taken into account when navigating the working machine towards the guidance path.

In some embodiments, the acquisition path may take into consideration properties of the machine (e.g. the implements fitted to the machine) and/or a desired manner in which the machine is steered (e.g. the acquisition path taking into account a minimum desired radius of curvature, or navigating to the guidance path over a longer distance).

In some embodiments, the acquisition path is optimised using an iterative mathematical model.

In some embodiments, the acquisition path is calculated in real-time.

Optionally, wherein the acquisition path is calculated taking into account an optimal acquisition path for the front implement to acquire the guidance path and/or an optimal acquisition path for the rear implement to acquire the guidance path.

In this way, positioning of the machine can be controlled so to optimise the position of the respective implement. Since the implements comprise the working portions of the machine, precise positioning of the implements is important for maximising performance of the working machine in completing a given task.

Optionally, wherein obtaining or determining the acquisition path comprises obtaining or determining a front acquisition path, wherein the front acquisition path defines a path for positioning a front axle of the machine, and wherein the control system is configured to direct positioning of the machine such that the front axle of the machine follows the front acquisition path.

In this way, more precise positioning of the front axle of the machine can be achieved.

In embodiments where the machine is fitted with a front implement, since the front implement is likely to be positioned proximal the front axle, more precise positioning of the front implement (i.e. a working point of the machine) can be achieved.

In some embodiments, the front axle is coupled to a pair of front wheels. By controlling the position of the front axle, the position of front wheels of the machine can be more accurately controlled, for example as compared to where a position of a centrepoint of the machine is controlled. It will be appreciated that the wheels are the portions of the machine that impact the ground and so precise positioning of the wheels is important to ensure they impact the ground at a desired location, e.g. avoiding crops or other areas of the ground that could be damaged when driven on.

Optionally, wherein obtaining or determining the acquisition path comprises obtaining or determining a rear acquisition path, wherein the rear acquisition path defines a path for positioning a rear axle of the machine, and wherein the control system is configured to direct positioning of the machine such that the rear axle of the machine follows the rear acquisition path.

In this way, more precise positioning of the rear axle of the machine can be achieved.

In embodiments where the machine is fitted with a rear implement, since the rear implement is likely to be positioned proximal the rear axle, more precise positioning of the rear implement (i.e. a working point of the machine) can be achieved.

In some embodiments, the rear axle is coupled to a pair of rear wheels. By controlling the position of the rear axle, the position of rear wheels of the machine can be more accurately controlled, for example as compared to where a position of a centrepoint of the machine is controlled. It will be appreciated that the wheels are the portions of the machine that impact the ground and so precise positioning of the wheels is important to ensure they impact the ground at a desired location, e.g. avoiding crops or other areas of the ground that could be damaged when driven on.

Optionally, wherein obtaining or determining the acquisition path comprises obtaining or determining the front acquisition path and the rear acquisition path, and wherein the control system is configured to direct positioning of the machine such that the front axle of the machine follows the front acquisition path and the rear axle of the machine follows the rear acquisition path.

In this way, more precise positioning of both the front and rear axles can be achieved. Consequently, more precise positioning of the working machine as a whole can be achieved.

In embodiments where the machine is fitted with a front and a rear implement, more precise positioning of both the front and rear implements can be achieved. Since, the implements comprise the working portions of the machine, precise positioning of the implements is important for maximising performance of the working machine in completing a given task.

Furthermore, by controlling the front and/or rear axles, the position of respective front and/or rear wheels can be more accurately controlled, for example as compared to where a position of a centrepoint of the machine is controlled.

Optionally, wherein the control system is configured to direct positioning of the front axle to follow the front acquisition path independently of positioning the rear axle to follow the rear acquisition path.

By independently controlling a position of the front axle to follow the front acquisition path, more precise positioning of the front axle can be achieved, irrespective of the position of the rear axle. Similarly, by independently controlling a position of the rear axle to follow the rear acquisition path, more precise positioning of the rear axle can be achieved, irrespective of the position of the front axle.

This is particularly beneficial in embodiments where the machine is fitted with front and/or rear implements. Independent control of the front axle to follow the front acquisition path enables more precise positioning of the front implement, irrespective of the position of the rear implement. Similarly, independent control of the rear axle to follow the rear acquisition path enables more precise positioning of the rear implement, irrespective of the position of the front implement.

Accordingly, more precise positioning of the front and/or rear implements can be achieved. Since, the implements comprise the working portions of the machine, precise positioning of the implements is important for maximising performance of the working machine in completing a given task.

Furthermore, by independently controlling the front and/or rear axles, the position of respective front and/or rear wheels can be more accurately controlled. It will be appreciated, that the front and rear wheels are the portions of the machine that impact the ground and so precise positioning of the wheels is important to ensure they impact the ground at a desired location, e.g. avoiding crops or other areas of the ground that could be damaged when driven on.

By positioning the front and rear axles independently of each other, greater flexibility in the way in which the machine is manoeuvred can be achieved. For example, independent control in this way enables additional modes, such as crab or offset steering modes, to be achieved. For example, a crab steering mode can be desirable in spreading out the contact area of the wheels on the ground, which is particularly beneficial in wet conditions.

Optionally, wherein the acquisition path is calculated based on an acquisition response input (e.g. a user input), wherein the acquisition response input is indicative of a desired attribute of the acquisition path.

In this way, a desired manner in which the machine is navigated to the guidance path can be achieved, whilst also optimising operational efficiency of the working machine. In other words, the acquisition path can be optimised such that the working machine is navigated in a desired manner, whilst enabling guidance path acquisition as efficiently as possible.

For example, in some embodiments, navigating the machine such that a smooth ride for the operator is achieved may be prioritised e.g. potentially at the expense of the distance to acquire the guidance path. In some embodiments, navigating the machine such that maximum machine stability is achieved may be prioritised e.g. potentially at the expense of the distance to acquire the guidance path. In some embodiments, navigating the machine such that guidance path acquisition is achieved in the minimum distance possible may be the priority, e.g. potentially at the expense of how smooth the ride is for the operator and/or machine stability.

In some embodiments, having an acquisition path defining a relatively small radius of curvature may reduce how smooth the riding experience is for the operator and/or reduce machine stability. However, this may enable the working machine to acquire the guidance path more quickly.

In some embodiments, guidance path acquisition in the minimum distance possible may reduce how smooth the riding experience is for the operator and/or reduce machine stability.

In some embodiments, a more gentle manner of guidance path acquisition and/or guidance path acquisition with increased stability may be preferred. This may be desired for operator comfort and/or for machine stability, for example, in cases where the working machine is fitted with a relatively large front and/or rear implement.

A more gentle manner of guidance path acquisition and/or guidance path acquisition with increased stability may be achieved by carrying out guidance path acquisition over a longer distance and/or with a larger minimum radius of curvature. In other words, the acquisition path may be longer and/or may define a larger minimum radius of curvature.

In some embodiments, the acquisition response input comprises a user input.

In other words, a machine operator can indicate a desired manner of controlling the working machine, for example in order to balance a desired riding experienced and/or stability with operational efficiency.

Optionally, wherein the control system is configured to receive an acquisition response input, wherein the acquisition response input is indicative of desired attributes of the acquisition path, e.g. a desired acquisition path length.

Optionally, wherein the desired attribute comprises one or more of the following: a maximum length of the acquisition path e.g. in a direction along the guidance path, a minimum length of the acquisition path e.g. in a direction along the guidance path, a maximum radius of curvature of the acquisition path, a minimum radius of curvature of the acquisition path.

Optionally, wherein the control system is configured to calculate a steering angle based on the acquisition path.

For example, the control system may be configured to calculate a acquisition path and calculate a front steering angle for front wheels of the working machine and/or a rear steering angle for rear wheels of the working machine based on this acquisition path.

Optionally, wherein the control system is configured to calculate the steering angle based on one or more of the following variables:

a. a heading error determined based on a heading of the machine with respect to the acquisition path;
b. a cross-track error determined based on a lateral position of the machine with respect to the acquisition path;
c. a yaw rate error determined based on the rate of change of the machine heading error;
d. a steering angle error determined based on a steering angle of the machine with respect to the acquisition path.

Optionally, wherein the control system is configured to calculate the steering angle based on one or more of:

a. a heading error gain, which applies a weighting to the heading error variable;
b. a cross-track error gain, which applies a weighting to the cross-track error variable;
c. a yaw rate error gain, which applies a weighting to the yaw rate error variable;
d. steering angle error gain, which applies a weighting to the steering angle error variable.

In some embodiments, the steering angle may in addition or alternatively be calculated based on a steering angle gradient. This can be advantageous in dampening the steering control of the working machine in order to increase stability.

Optionally, wherein one or more of the heading error gain, the cross-track error gain, the yaw rate error gain and the steering angle error gain is adjustable.

In this way, the steering angle calculation can be calibrated, thereby optimising performance.

Such adjustment may be based on control variables, for example vehicle speed, suspension load, draft force etc.

In some embodiments, the heading error again may depend upon a desired yaw rate.

In some embodiments to cross track error again and/or yaw rate error gain may be based on vehicle speed.

Optionally, wherein the machine comprises a pair of front wheels and a pair of rear wheels, and wherein the control system is configured to determine a front steering angle of the front wheels and/or a rear steering angle of the rear wheels, such that calculating the steering angle comprises calculating the front steering angle and/or the rear steering angle.

In some embodiments, the front and/or rear steering angle may be calculated based on one or more of: a heading error, a cross-track error, a yaw rate error, a steering angle error.

In some embodiments, the front and/or rear steering angle may be calculated based on one or more of: a heading error gain, a cross-track error gain, a yaw rate error gain, a steering angle error gain.

Optionally, wherein the front steering angle is calculated independently from the rear steering angle.

Optionally, wherein the control system is configured to calculate the front steering angle based on the front acquisition path and/or the rear steering angle based on the rear acquisition path.

In other words, in some embodiments, the control system may be configured to calculate a front acquisition path and a front steering angle based on this.

In some embodiments the control system may be configured to calculate a rear acquisition path and a rear steering angle based on this.

Optionally, wherein the control system is configured to direct positioning of the machine via two-wheel steer (2WS) or four-wheel steer (4WS).

In some embodiments, a user input may determine whether the machine operates in a 2WS mode or a 4WS mode.

When the control system is configured to direct positioning of the machine via 4WS, control of the position of the front axle and position of the rear axle can be facilitated.

In some embodiments, in a 2WS mode, the rear wheels are fixed in the straight ahead position (i.e. at a steering angle of zero). In this embodiment, all steering is controlled by the front wheels such that the turn centre of the machine is located in the centre of the rear axle of the machine.

In some embodiments, a 4WS proportional mode is used. In this mode, the front steering angle is converted to a percentage of the total operating range. The rear steering angle can also be set to the same percentage of the total operating range, however the total operating range of the rear wheels is typically less than the front. In this embodiment, the term centre of the machine is located near the centre of the wheelbase, though slightly off centre towards the rear due to the reduced range of the steering angle of the rear wheels.

In some embodiments, a rear axle offset mode is used. In this operating mode, a "rear axle offset" to the left or right of the front axle can be selected, e.g. by a user. This can be desirable to reduce excessive impact on the ground being worked by the working machine.

Optionally, wherein the control system is configured such that the machine is considered to be positioned to track the guidance path when the machine is positioned within a predetermined boundary with respect to the guidance path, for example a predetermined heading error boundary and/or a predetermined cross-track error boundary.

In other words, when the working machine is sufficiently close to the guidance path, it is considered to have acquired the guidance path.

In some embodiments, the working machine is considered to be positioned to track the guidance path when the front and/or rear implement is positioned within a predetermined boundary with respect to the guidance path, for example a predetermined heading error boundary and/or a predetermined cross-track error boundary.

Optionally, wherein the control system is configured such that, once the machine is considered to be positioned to track the guidance path, the control system directs the machine to track the guidance path.

In some embodiments, tracking of the guidance path can also be carried out in a 2WS mode, a 4WS mode, and/or with a "rear axle offsets".

It will be appreciated that the control system may be configured to direct the working machine to track the guidance path by any suitable means.

Optionally, wherein the control system is configured to receive a tracking response input (e.g. a user input), wherein the tracking response input is indicative of how closely the machine is directed to track the guidance path.

In other words, the tracking response input may indicate how precisely the working machine should track the guidance path, for example, this may be at the expense of operator comfort and/or machine stability. In some embodiments, the tracking machine input may indicate that machine stability and/or operator comfort should be prioritised, for example, this may be at the expense of how closely the working machine tracks the guidance path.

In some embodiment, the tracking response input is used to determine a limit on the rate of change of the steering angle directed by the control system. For example, when the limit on the rate of change of the steering angle is lower, this will prevent harsh changes in steering angle and so will result in a more comfortable ride for the operator. However, this is likely to lead to a decrease in the guidance path tracking accuracy, particularly at high speed. On the other hand, when the limit on the rate of change of the steering angle is higher, the steering system can move at large rates of change, which tends to increase guidance path tracking accuracy, however this can cause undesirable dynamics in some machine implement configurations.

In some embodiments, the tracking response input is determined based on a user input.

In this way, an operator has a degree of control over the manner in which the machine is steered when tracking the guidance path.

In other words, a machine operator can indicate a desired manner of controlling the working machine, for example in order to balance a desired riding experienced and/or stability with operational efficiency.

Optionally, wherein the control system is configured to receive a guidance path acquisition input (e.g. a user input) and wherein, in response to receiving the guidance path acquisition input, the control system is configured to direct positioning of the machine in accordance with the implement information, such that the machine is positioned to track the guidance path.

In other words, the guidance path acquisition input may be an instruction for the control system to acquire the guidance path in an automatic steer (i.e. auto-steer) mode. In such a mode, the control system automatically controls steering of the working machine to navigate the working machine towards the guidance path.

When the guidance path acquisition input is a user input, an operator can control when the working machine is directed to acquire a guidance path.

The present teachings provide a working machine according to the appended claim 25.

A further aspect of the present teachings provides a working machine comprising a front implement towards a front of the machine and a rear implement towards a rear of the machine, wherein the machine further comprises a control system as disclosed herein.

A further aspect of the present teachings provides a control system for a working machine. The control system may be configured to:

> obtain or determine a guidance path, wherein the guidance path defines a path to be tracked by the machine;
> obtain or determine an acquisition path, wherein the acquisition path defines a path for the machine to follow in order to position the machine to track the guidance path; and/or
> direct the machine to follow the acquisition path, in order to position the machine to track the guidance path.

In this way, the working machine may be controlled to follow a trajectory (e.g. an optimal trajectory) in order to navigate the working machine to a position in which it can track the guidance path. This process is often termed "acquiring" the guidance path.

For example, the working machine may be instructed, e.g. by an operator, to track a guidance path. In order to do so, the control system obtains or determines an acquisition path and directs the machine to follow the acquisition path. In doing so, the machine is located in a position in which it is able to track the guidance path.

In precision farming applications, it is important that any instruction to the working machine to track a guidance path is actioned in an efficient manner, in order to position the working machine (in particular a working point of the working machine) on the guidance path in the shortest distance possible.

By directing positioning of the working machine in accordance with an acquisition path, more predictable steering of the working machine can be achieved. In other words, by calculating an acquisition path, improved repeatability of how the machine is controlled can be achieved. This is advantageous to the operator in providing more predictable and precise operation of the working machine.

The acquisition path may be calculated based on a number of variables, for example user selected variables. Accordingly, having a control system that obtains or determines an acquisition path and then uses this to direct the working machine enables such variables to be taken into account when navigating the working machine towards the guidance path.

In some embodiments, the acquisition path may take into consideration properties of the machine (e.g. any implements fitted to the machine) and/or a desired manner in which the machine is steered (e.g. the acquisition path taking into account a minimum desired radius of curvature, or navigating to the guidance path over a longer distance).

In some embodiments, the acquisition path is optimised using an iterative mathematical model.

In some embodiments, the acquisition path is calculated in real-time.

Optionally, wherein the acquisition path is calculated based on an acquisition response input, wherein the acquisition response input is indicative of a desired attribute of the acquisition path.

In this way, a desired manner in which the machine is navigated to the guidance path can be achieved, whilst also optimising operational efficiency of the working machine. In other words, the acquisition path can be optimised such that the working machine is navigate in a desired manner, whilst enabling guidance path acquisition as efficiently as possible.

For example, in some embodiments, navigating the machine such that a smooth ride for the operator is achieved may be prioritised e.g. potentially at the expense of the distance to acquire the guidance path. In some embodiments, navigating the machine such that maximum machine stability is achieved may be prioritised e.g. potentially at the expense of the distance to acquire the guidance path. In some embodiments, navigating the machine such that guidance path acquisition is achieved in the minimum distance possible may be the priority, e.g. potentially at the expense of how smooth the ride is for the operator and/or machine stability.

In some embodiments, having an acquisition path defining a small radius of curvature may reduce how smooth the riding experience is for the operator and/or reduce machine stability. However, this may enable the working machine to acquire the guidance path more quickly.

In some embodiments, guidance path acquisition in the minimum distance possible may reduce how smooth the riding experience is for the operator and/or reduce machine stability.

In some embodiments, a more gentle manner of guidance path acquisition and/or guidance path acquisition with increased stability may be preferred. This may be desired for operator comfort and/or for machine stability, for example, in cases where the working machine is fitted with a relatively large front and/or rear implement.

A more gentle manner of guidance path acquisition and/or guidance path acquisition with increased stability may be achieved by carrying out guidance path acquisition over a longer distance and/or with a larger minimum radius of curvature. In other words, the acquisition path may be longer and/or may define a larger minimum radius of curvature.

Optionally, wherein the control system is configured to receive an acquisition response input, wherein the acquisition response input is indicative of a desired attribute of the acquisition path; and wherein the control system determines the acquisition path based on the acquisition response input.

Optionally, wherein the acquisition response input comprises a user input.

In this way, an operator has a degree of control over the manner in which the machine is steered when navigating to the guidance path.

In other words, a machine operator can indicate a desired manner of controlling the working machine, for example in order to balance a desired riding experienced and/or stability with operational efficiency.

In some embodiments, the acquisition response input may be selected for each guidance path acquisition process.

In some embodiments, the acquisition response input may be selected for multiple guidance path acquisition processes. For example, the acquisition response input may be a preset value that is obtained for each guidance path acquisition process carried out by the control system over a given time period/number of guidance line acquisition processes.

Optionally, wherein the desired attribute comprises one or more of the following: a maximum length of the acquisition path e.g. in a direction along the guidance path, a minimum length of the acquisition path e.g. in a direction along the guidance path, a maximum radius of curvature of the acquisition path, a minimum radius of curvature of the acquisition path.

Optionally, wherein obtaining or determining the acquisition path comprises obtaining or determining a front acquisition path, wherein the front acquisition path defines a path for positioning a front axle of the machine, and wherein the control system is configured to direct positioning of the machine such that the front axle of the machine follows the front acquisition path.

In this way, more precise positioning of the front axle of the machine can be achieved.

In embodiments where the machine is fitted with a front implement, since the front implement is likely to be positioned proximal the front axle, more precise positioning of the front implement (i.e. a working point of the machine) can be achieved.

Furthermore, by controlling the position of the front axle, the position of front wheels of the machine can be more accurately controlled, for example as compared to where a position of a centrepoint of the machine is controlled. It will be appreciated that the wheels are the portions of the machine that impact the ground and so precise positioning of the wheels is important to ensure they impact the ground at a desired location, e.g. avoiding crops or other areas of the ground that could be damaged when driven on.

In some embodiments, the front axle is coupled to a pair of front wheels. In some embodiments, the rear axle is coupled to a pair of rear wheels.

Optionally, wherein obtaining or determining the acquisition path comprises obtaining or determining a rear acquisition path, wherein the rear acquisition path defines a path for positioning a rear axle of the machine, and wherein the control system is configured to direct positioning of the machine such that the rear axle of the machine follows the rear acquisition path.

In this way, more precise positioning of the rear axle of the machine can be achieved.

In embodiments where the machine is fitted with a rear implement, since the rear implement is likely to be positioned proximal the rear axle, more precise positioning of the rear implement (i.e. a working point of the machine) can be achieved.

Furthermore, by controlling the position of the rear axle, the position of rear wheels of the machine can be more accurately controlled, for example as compared to where a position of a centrepoint of the machine is controlled. It will be appreciated that the wheels are the portions of the machine that impact the ground and so precise positioning of the wheels is important to ensure they impact the ground at a desired location, e.g. avoiding crops or other areas of the ground that could be damaged when driven on.

Optionally, wherein obtaining or determining the acquisition path comprises obtaining or determining the front acquisition path and the rear acquisition path, and wherein the control system is configured to direct positioning of the machine such that the front axle of the machine follows the front acquisition path and the rear axle of the machine follows the rear acquisition path.

In this way, more precise positioning of both the front and rear axles can be achieved. Consequently, more precise positioning of the working machine as a whole can be achieved.

In embodiments where the machine is fitted with a front and a rear implement, more precise positioning of both the front and rear implements can be achieved. Since, the implements comprise the working portions of the machine, precise positioning of the implements is important for maximising performance of the working machine in completing a given task.

Furthermore, by controlling the front and/or rear axles, the position of respective front and/or rear wheels can be more accurately controlled, for example as compared to where a position of a centrepoint of the machine is controlled.

Optionally, wherein the control system is configured to direct positioning of the front axle to follow the front acquisition path independently of positioning the rear axle to follow the rear acquisition path.

By independently controlling a position of the front axle to follow the front acquisition path, more precise positioning of the front axle can be achieved, irrespective of the position of the rear axle. Similarly, by independently controlling a position of the rear axle to follow the rear acquisition path, more precise positioning of the rear axle can be achieved, irrespective of the position of the front axle.

This is particularly beneficial in embodiments where the machine is fitted with front and/or rear implements.

Independent control of the front axle to follow the front acquisition path enables more precise positioning of the front implement, irrespective of the position of the rear implement. Similarly, independent control of the rear axle to follow the rear acquisition path enables more precise positioning of the rear implement, irrespective of the position of the front implement.

Accordingly, more precise positioning of the front and/or rear implements can be achieved. Since, the implements comprise the working portions of the machine, precise positioning of the implements is important for maximising performance of the working machine in completing a given task.

Furthermore, by independently controlling the front and/or rear axles, the position of respective front and/or rear wheels can be more accurately controlled. It will be appreciated, that the front and rear wheels are the portions of the machine that impact the ground and so precise positioning of the wheels is important to ensure they impact the ground at a desired location, e.g. avoiding crops or other areas of the ground that could be damaged when driven on.

By positioning the front and rear axles independently of each other, greater flexibility in the way in which the machine is manoeuvred can be achieved. For example, independent control in this way enables additional modes, such as crab or offset steering modes, to be achieved. For example, a crab steering mode can be desirable in spreading out the contact area of the wheels on the ground, which is particularly beneficial in wet conditions.

Optionally, wherein the front acquisition path and/or the rear acquisition path is calculated based on the acquisition response input.

Optionally, wherein the control system is configured to calculate a steering angle based on the acquisition path.

For example, the control system may be configured to calculate a single acquisition path and calculate a front steering angle for front wheels of the working machine and/or a rear steering angle for rear wheels of the working machine based on this single acquisition path.

Optionally, wherein the control system is configured to calculate the steering angle based on one or more of the following variables:

a. a heading error determined based on a heading of the machine with respect to the acquisition path;
b. a cross-track error determined based on a lateral position of the machine with respect to the acquisition path;
c. a yaw rate error determined based on the rate of change of the machine heading error;
d. a steering angle error determined based on a steering angle of the machine with respect to the acquisition path.

Optionally, wherein the control system is configured to calculate the steering angle based on one or more of:

a. a heading error gain, which applies a weighting to the heading error variable;
b. a cross-track error gain, which applies a weighting to the cross-track error variable;
c. a yaw rate error gain, which applies a weighting to the yaw rate error variable;
d. steering angle error gain, which applies a weighting to the steering angle error variable.

In some embodiments, the steering angle may in addition or alternatively be calculated based on a steering angle gradient. This can be advantageous in dampening the steering control of the working machine in order to increase stability.

Optionally, wherein one or more of the heading error gain, the cross-track error gain, the yaw rate error gain and the steering angle error gain is adjustable.

In this way, the steering angle calculation can be calibrated, thereby optimising performance.

Such adjustment may be based on control variables, for example vehicle speed, suspension load, draft force etc.

In some embodiments, the heading error gain may depend upon a desired yaw rate.

In some embodiments to cross track error gain and/or yaw rate error gain may be based on vehicle speed.

Optionally, wherein the machine comprises a pair of front wheels and a pair of rear wheels, and wherein the control system is configured to determine a front steering angle of the front wheels and/or a rear steering angle of the rear wheels, such that calculating the steering angle comprises calculating the front steering angle and/or the rear steering angle.

In some embodiments, the front and/or rear steering angle may be calculated based on one or more of: a heading error, a cross-track error, a yaw rate error, a steering angle error.

In some embodiments, the front and/or rear steering angle may be calculated based on one or more of: a heading error gain, a cross-track error gain, a yaw rate error gain, a steering angle error gain.

Optionally, wherein the front steering angle is calculated independently from the rear steering angle.

Optionally, wherein the control system is configured to calculate the front steering angle based on the front acquisition path and/or the rear steering angle based on the rear acquisition path.

In other words, in some embodiments, the control system may be configured to calculate a front acquisition path and a front steering angle based on this. In some embodiments, the control system may be configured to calculate a rear acquisition path and a rear steering angle based on this.

Optionally, wherein the control system is configured to direct positioning of the machine via two-wheel steer (2WS) or four-wheel steer (4WS).

In some embodiments, a user input may determine whether the machine operates in a 2WS mode or a 4WS mode.

When the control system is configured to direct positioning of the machine via 4WS, control of the position of the front axle and position of the rear axle can be facilitated.

In some embodiments, in a 2WS mode, the rear wheels are fixed in the straight ahead position (i.e. at a steering angle of zero). In this embodiment, all steering is controlled by the front wheels such that the turn centre of the machine is located in the centre of the rear axle of the machine.

In some embodiments, a 4WS proportional mode is used. In this mode, the front steering angle is converted to a percentage of the total operating range. The rear steering angle can also be set to the same percentage of the total operating range, however the total operating range of the rear wheels is typically less than the front. In this embodiment, the turn centre of the machine is located near the centre of the wheelbase, though slightly off centre towards the rear due to the reduced range of the steering angle of the rear wheels.

In some embodiments, a rear axle offset mode is used. In this operating mode, a "rear axle offset" to the left or right of the front axle can be selected, e.g. by a user. This can be desirable to reduce excessive impact on the ground being worked by the working machine.

Optionally, wherein the working machine comprises a front axle and a rear axle, and wherein the control system is configured to direct the machine to follow the acquisition path by controlling a position of the front axle and a position of the rear axle.

In this way, the control system is configured to control a location of the front axle and to control a location of the rear axle in order to direct positioning of the working machine. This contrasts with some known systems in which a position of the working machine is controlled by controlling a position of a centrepoint of the machine. The centrepoint of the machine may be the midpoint of the machine in both lateral and longitudinal directions.

By controlling a position of the front axle and a position of the rear axle, more precise positioning of both the front and rear axles can be achieved. Consequently, more precise positioning of the working machine as a whole can be achieved.

In embodiments where the machine is fitted with a front implement, since the front implement is likely to be positioned proximal the front axle, more precise positioning of the front implement (i.e. a working point of the machine) can be achieved by controlling the position of the front axle.

Similarly, in embodiments where the machine is fitted with a rear implement, since the rear implement is likely to be positioned proximal the rear axle, more precise positioning of the rear implement (i.e. a working point of the machine) can be achieved by controlling the position of the rear axle.

Accordingly, more precise positioning of the front and/or rear implements can be achieved. Since, the implements comprise the working portions of the machine, precise positioning of the implements is important for maximising performance of the working machine in completing a given task.

Furthermore, by controlling the front and/or rear axles, the position of respective front and/or rear wheels can be more accurately controlled. It will be appreciated, that the front and rear wheels are the portions of the machine that impact the ground and so precise positioning of the wheels is important to ensure they impact the ground at a desired location, e.g. avoiding crops or other areas of the ground that could be damaged when driven on.

A further aspect of the present teachings provides a control system for a working machine, wherein the working machine comprises a front axle and a rear axle. The control system may be configured to:

obtain or determine a guidance path, wherein the guidance path defines a path to be tracked by the machine; and

direct positioning of the machine by controlling a position of the front axle and a position of the rear axle, in order to position the machine to track the guidance path.

In this way, the working machine may be controlled to navigate the working machine to a position in which it can track the guidance path. This process is often termed "acquiring" the guidance path.

The control system is configured to control a location of the front axle and to control a location of the rear axle in order to direct positioning of the working machine. This contrasts with some known systems in which a position of the working machine is controlled by controlling a position of a centrepoint of the machine. The centrepoint of the machine may be the midpoint of the machine in both lateral and longitudinal directions.

In precision farming applications, it is important that any instruction to the working machine to track a guidance path is actioned in an efficient manner, in order to position the working machine (in particular a working point of the working machine) on the guidance path in the shortest distance possible.

By controlling a position of the front axle and a position of the rear axle, more precise positioning of both the front and rear axles can be achieved. Consequently, more precise positioning of the working machine as a whole can be achieved.

In embodiments where the machine is fitted with a front implement, since the front implement is likely to be positioned proximal the front axle, more precise positioning of the front implement (i.e. a working point of the machine) can be achieved by controlling the position of the front axle.

Similarly, in embodiments where the machine is fitted with a rear implement, since the rear implement is likely to be positioned proximal the rear axle, more precise positioning of the rear implement (i.e. a working point of the machine) can be achieved by controlling the position of the rear axle.

Accordingly, more precise positioning of the front and/or rear implements can be achieved. Since, the implements comprise the working portions of the machine, precise positioning of the implements is important for maximising performance of the working machine in completing a given task.

Furthermore, by controlling the front and/or rear axles, the position of respective front and/or rear wheels can be more accurately controlled. It will be appreciated, that the front and rear wheels are the portions of the machine that impact the ground and so precise positioning of the wheels is important to ensure they impact the ground at a desired location, e.g. avoiding crops or other areas of the ground that could be damaged when driven on.

In some embodiments, the front axle is coupled to a pair of front wheels. In some embodiments, the rear axle is coupled to a pair of rear wheels.

Optionally, wherein the control system is configured to direct independently a position of the front axle and a position of the rear axle.

By independently controlling a position of the front axle, more precise positioning of the front axle can be achieved, irrespective of the position of the rear axle. Similarly, by independently controlling a position of the rear axle, more precise positioning of the rear axle can be achieved, irrespective of the position of the front axle.

This is particularly beneficial in embodiments where the machine is fitted with front and/or rear implements. Independent control of the front axle enables more precise positioning of the front implement, irrespective of the position of the rear implement. Similarly, independent control of the rear axle enables more precise positioning of the rear implement, irrespective of the position of the front implement.

Accordingly, more precise positioning of the front and/or rear implements can be achieved. Since, the implements comprise the working portions of the machine, precise positioning of the implements is important for maximising performance of the working machine in completing a given task.

Furthermore, by independently controlling the front and/or rear axles, the position of respective front and/or rear wheels can be more accurately controlled. It will be appreciated, that the front and rear wheels are the portions of the machine that impact the ground and so precise positioning of the wheels is important to ensure they impact the ground at a desired location, e.g. avoiding crops or other areas of the ground that could be damaged when driven on.

By positioning the front and rear axles independently of each other, greater flexibility in the way in which the machine is manoeuvred can be achieved. For example, independent control in this way enables additional modes, such as crab or offset steering modes, to be achieved. For example, a crab steering mode can be desirable in spreading out the contact area of the wheels on the ground, which is particularly beneficial in wet conditions.

Optionally, wherein the control system is configured to direct positioning of the machine via four-wheel steer (4WS).

In this way, precise control of the position of the front axle and position of the rear axle can be facilitated.

In some embodiments, a user input may determine whether the machine operates in a 2WS mode or a 4WS mode.

In some embodiments, in a 2WS mode, the rear wheels are fixed in the straight ahead position (i.e. at a steering angle of zero). In this embodiment, all steering is controlled by the front wheels such that the turn centre of the machine is located in the centre of the rear axle of the machine.

In some embodiments, a 4WS proportional mode is used. In this mode, the front steering angle is converted to a percentage of the total operating range. The rear steering angle can also be set to the same percentage of the total operating range, however the total operating range of the rear wheels is typically less than the front. In this embodiment, the turn centre of the machine is located near the centre of the wheelbase, though slightly off centre towards the rear due to the reduced range of the steering angle of the rear wheels.

In some embodiments, a rear axle offset mode is used. In this operating mode, a "rear axle offset" to the left or right of the front axle can be selected, e.g. by a user. This can be desirable to reduce excessive impact on the ground being worked by the working machine.

Optionally, wherein the working machine is configured to be fitted with a front implement towards a front of the machine and/or a rear implement towards a rear of the machine, and wherein the control system is configured to obtain or determine implement information in relation to the front implement and/or the rear implement, and to direct positioning of the front axle and rear axle taking into account said implement information.

When fitted with front and/or rear implements, it can be difficult for a working machine to be steered such that the front and/or rear implements are appropriately placed with respect to a guidance path. For example, in some situations, whilst the working machine may be following the guidance path, one or other of the front and rear implements may not be in the optimal position for completing the required task. This can lead to suboptimal performance of the working machine when completing a given task.

By directing positioning of the machine in accordance with the implement information, the control system can direct the position of the machine in the most appropriate way for the implements fitted, e.g. to maintain stability, ensure optimal operating conditions of the implements, ensure optimal positioning of the implements etc.

Optionally, wherein the implement information is indicative of a position of the front implement and/or a position of the rear implement with respect to the machine.

In this way, the machine can be positioned such that the position of the front and/or rear implement with respect the guidance path can be optimised. Since the front and rear implements are the working parts of the machine, optimising the position of the respective implement has the effect of enhancing precision of the working machine when completing a given task.

In precision farming applications, it is important that any instruction to the working machine to track a guidance path is actioned in an efficient manner, in order to position the working machine (in particular a working point of the working machine) on the guidance path in the shortest distance possible.

By directing positioning of the machine in accordance with the implement information, that relates to the position of the front and/or rear implements with respect to the working machine, positioning of the machine can be controlled so to optimise the position of the respective implement. Since the implements comprise the working portions of the machine, precise positioning of the implements is important for maximising performance of the working machine in completing a given task.

For example, the implement information may be indicative of a position of the front implement and/or a position of the rear implement with respect to the front axle and/or rear axle respectively.

It will be appreciated that one or both of the front and/or rear implements may be provided in an offset position with respect to a longitudinal axis of the working machine.

In some embodiments, the implement information may be indicative of a weight distribution of the respective implement. In such instances, the control system may be configured to direct positioning of the machine such that stability of the machine is maintained, in view of the weight distribution of the machine and implement(s).

Optionally, wherein the implement information comprises information relating to an implement priority input (e.g. a user input), wherein the control system is configured to receive said information relating to an implement priority input, wherein the implement priority input is indicative of whether a position, with respect to the guidance path, of the front implement, the rear implement, or both the front implement and the rear implement is to be prioritised, and wherein the control system is configured to direct positioning of the machine in accordance with the implement priority input.

In this way, priority can be given to the implement that is most important e.g. for completion of a given task. In some cases, both the front and the rear implements can be prioritised when the positions of the front and rear implements with respect to the guidance path are both important, e.g. for completion of a given task.

In some embodiments, the implement priority input may be user selected.

Optionally, wherein the control system is configured to direct positioning of the machine such that:

a. positioning of the front implement to track the guidance path is prioritised when the implement priority input indicates that the position of the front implement is to be prioritised;
b. positioning of the rear implement to track the guidance path is prioritised when the implement priority input indicates that the position of the rear implement is to be prioritised; and/or
c. positioning of both the front implement and the rear implement to respectively track the guidance path is prioritised when the implement priority input indicates that the position of both the front implement and rear implement is to be prioritised.

Optionally, wherein the control system is configured to:

obtain or determine an acquisition path, wherein the acquisition path defines a path for the machine to follow in order to position the machine to track the guidance path; and
direct positioning of the machine by directing the machine to follow the acquisition path.

In this way, the working machine may be controlled to follow a trajectory (e.g. an optimal trajectory) in order to navigate the working machine to a position in which it can track the guidance path. This process is often termed "acquiring" the guidance path.

For example, the working machine may be instructed, e.g. by an operator, to track a guidance path. In order to do so, the control system obtains or determines an acquisition path and directs the machine to follow the acquisition path. In doing so, the machine is located in a position in which it is able to track the guidance path.

In precision farming applications, it is important that any instruction to the working machine to track a guidance path is actioned in an efficient manner, in order to position the working machine (in particular a working point of the working machine) on the guidance path in the shortest distance possible.

By directing positioning of the working machine in accordance with an acquisition path, more predictable steering of the working machine can be achieved. In other words, by calculating an acquisition path, improved repeatability of how the machine is controlled can be achieved. This is advantageous to the operator in providing more predictable and precise operation of the working machine.

The acquisition path may be calculated based on a number of variables, for example user selected variables. Accordingly, having a control system that obtains or determines an acquisition path and then uses this to direct the working machine enables such variables to be taken into account when navigating the working machine towards the guidance path.

In some embodiments, the acquisition path may take into consideration properties of the machine (e.g. any implements fitted to the machine) and/or a desired manner in which the machine is steered (e.g. the acquisition path taking into account a minimum desired radius of curvature, or navigating to the guidance path over a longer distance).

In some embodiments, the acquisition path is optimised using an iterative mathematical model.

In some embodiments, the acquisition path is calculated in real-time.

Optionally, wherein the acquisition path is calculated in accordance with the implement information.

Optionally, wherein the acquisition path is calculated taking into account an optimal acquisition path for a front implement (when present) to acquire the guidance path and/or an optimal acquisition path for a rear implement (when present) to acquire the guidance path.

In this way, positioning of the machine can be controlled so to optimise the position of the respective implement. Since the implements comprise the working portions of the machine, precise positioning of the implements is important for maximising performance of the working machine in completing a given task.

Optionally, wherein obtaining or determining the acquisition path comprises obtaining or determining a front acquisition path, wherein the front acquisition path defines a path for positioning the front axle of the machine, and wherein the control system is configured to direct positioning of the front axle such that the front axle of the machine follows the front acquisition path.

In this way, more precise positioning of the front axle of the machine can be achieved.

Optionally, wherein obtaining or determining the acquisition path comprises obtaining or determining a rear acquisition path, wherein the rear acquisition path defines a path for positioning the rear axle of the machine, and wherein the control system is configured to direct positioning of the rear axle such that the rear axle of the machine follows the rear acquisition path.

In this way, more precise positioning of the rear axle of the machine can be achieved.

Optionally, wherein obtaining or determining the acquisition path comprises obtaining or determining the front acquisition path and the rear acquisition path, and wherein the control system is configured to direct positioning of the machine such that the front axle of the machine follows the front acquisition path and the rear axle of the machine follows the rear acquisition path.

In this way, more precise positioning of both the front and rear axles can be achieved. Consequently, more precise positioning of the working machine as a whole can be achieved.

Optionally, wherein the control system is configured to direct positioning of the front axle to follow the front acquisition path independently of positioning the rear axle to follow the rear acquisition path.

By independently controlling a position of the front axle to follow the front acquisition path, more precise positioning of the front axle can be achieved, irrespective of the position of the rear axle. Similarly, by independently controlling a position of the rear axle to follow the rear acquisition path, more precise positioning of the rear axle can be achieved, irrespective of the position of the front axle.

This is particularly beneficial in embodiments where the machine is fitted with front and/or rear implements. Independent control of the front axle to follow the front acquisition path enables more precise positioning of the front implement, irrespective of the position of the rear implement. Similarly, independent control of the rear axle to follow the rear acquisition path enables more precise positioning of the rear implement, irrespective of the position of the front implement.

Accordingly, more precise positioning of the front and/or rear implements can be achieved. Since, the implements comprise the working portions of the machine, precise positioning of the implements is important for maximising performance of the working machine in completing a given task.

Furthermore, by independently controlling the front and/or rear axles, the position of respective front and/or rear wheels can be more accurately controlled. It will be appreciated, that the front and rear wheels are the portions of the machine that impact the ground and so precise positioning of the wheels is important to ensure they impact the ground at a desired location, e.g. avoiding crops or other areas of the ground that could be damaged when driven on.

By positioning the front and rear axles independently of each other, greater flexibility in the way in which the machine is manoeuvred can be achieved. For example, independent control in this way enables additional modes, such as crab or offset steering modes, to be achieved. For example, a crab steering mode can be desirable in spreading out the contact area of the wheels on the ground, which is particularly beneficial in wet conditions.

Optionally, wherein the control system is configured to receive an acquisition response input (e.g. a user input), wherein the acquisition response input is indicative of desired attributes of the acquisition path, e.g. a desired acquisition path length.

In this way, a desired manner in which the machine is navigated can be achieved, whilst also optimising operational efficiency of the working machine. In other words, the acquisition path can be optimised such that the working machine is navigated in a desired manner, whilst enabling guidance path acquisition as efficiently as possible.

For example, in some embodiments, navigating the machine such that a smooth ride for the operator is achieved may be prioritised e.g. potentially at the expense of the distance to acquire the guidance path. In some embodiments, navigating the machine such that maximum machine stability is achieved may be prioritised e.g. potentially at the expense of the distance to acquire the guidance path. In some embodiments, navigating the machine such that guidance path acquisition is achieved in the minimum distance possible may be the priority, e.g. potentially at the expense of how smooth the ride is for the operator and/or machine stability.

In some embodiments, having an acquisition path defining a small radius of curvature may reduce how smooth the riding experience is for the operator and/or reduce machine stability. However, this may enable the working machine to acquire the guidance path more quickly.

In some embodiments, guidance path acquisition in the minimum distance possible may reduce how smooth the riding experience is for the operator and/or reduce machine stability.

In some embodiments, a more gentle manner of guidance path acquisition and/or guidance path acquisition with increased stability may be preferred. This may be desired for operator comfort and/or for machine stability, for example, in cases where the working machine is fitted with a relatively large front and/or rear implement.

A more gentle manner of guidance path acquisition and/or guidance path acquisition with increased stability may be achieved by carrying out guidance path acquisition over a longer distance and/or with a larger minimum radius of curvature. In other words, the acquisition path may be longer and/or may define a larger minimum radius of curvature.

Optionally, wherein the desired attribute comprises one or more of the following: a maximum length of the acquisition path e.g. in a direction along the guidance path, a minimum length of the acquisition path e.g. in a direction along the guidance path, a maximum radius of curvature of the acquisition path, a minimum radius of curvature of the acquisition path.

In some embodiments, the acquisition response input comprises a user input.

In this way, an operator has a degree of control over the manner in which the machine is steered when navigating to the guidance path.

In other words, a machine operator can indicate a desired manner of controlling the working machine, for example in order to balance a desired riding experienced and/or stability with operational efficiency.

Optionally, wherein the control system is configured to calculate a steering angle based on the acquisition path.

For example, the control system may be configured to calculate a single acquisition path and calculate a front steering angle for front wheels of the working machine and/or a rear steering angle for rear wheels of the working machine based on this single acquisition path.

Optionally, wherein the control system is configured to calculate the steering angle based on one or more of the following variables:

    a. a heading error determined based on a heading of the machine with respect to the acquisition path;
    b. a cross-track error determined based on a lateral position of the machine with respect to the acquisition path;
    c. a yaw rate error determined based on the rate of change of the machine heading error;
    d. a steering angle error determined based on a steering angle of the machine with respect to the acquisition path.

Optionally, wherein the control system is configured to calculate the steering angle based on one or more of:

    a. a heading error gain, which applies a weighting to the heading error variable;
    b. a cross-track error gain, which applies a weighting applies to the cross-track error variable;
    c. a yaw rate error gain, which applies a weighting to the yaw rate error variable;
    d. steering angle error gain, which applies a weighting to the steering angle error variable.

In some embodiments, the steering angle may in addition or alternatively be calculated based on a steering angle gradient, wherein the steering angle gradient is indicative of the historical change and steering angle over time and a projection of where this will position the machine in the future. This can be advantageous in dampening the steering control of the working machine in order to increase stability.

Optionally, wherein one or more of the heading error gain, the cross-track error gain, the yaw rate error gain and the steering angle error gain is adjustable.

In this way, these steering angle calculation can be calibrated, thereby optimising performance.

Such adjustment may be based on control variables, for example vehicle speed, suspension load, draft force etc.

In some embodiments, the heading error again may depend upon a desired yaw rate.

In some embodiments to cross track error again and/or yaw rate error gain may be based on vehicle speed.

Optionally, wherein the machine comprises a pair of front wheels coupled to the front axle and a pair of rear wheels coupled to the rear axle, and wherein the control system is configured to determine a front steering angle of the front wheels and/or a rear steering angle of the rear wheels, such that calculating the steering angle comprises calculating the front steering angle and/or the rear steering angle.

In some embodiments, the front and/or rear steering angle may be calculated based on one or more of: a heading error, a cross-track error, a yaw rate error, a steering angle error.

In some embodiments, the front and/or rear steering angle may be calculated based on one or more of: a heading error gain, a cross-track error gain, a yaw rate error gain, a steering angle error gain.

Optionally, wherein the front steering angle is calculated independently from the rear steering angle.

Optionally, wherein the control system is configured to calculate the front steering angle based on the front acquisition path and/or the rear steering angle based on the rear acquisition path.

In other words, in some embodiments, the control system may be configured to calculate a front acquisition path and a front steering angle based on this. In some embodiments the control system may be configured to calculate a rear acquisition path and a rear steering angle based on this.

Optionally, wherein the control system is configured such that the machine is considered to be positioned to track the guidance path when the machine is positioned within a predetermined boundary with respect to the guidance path, for example a predetermined heading error boundary and/or a predetermined cross-track error boundary.

In other words, when the working machine is sufficiently close to the guidance path, it is considered to have acquired the guidance path.

Optionally, wherein the control system is configured such that, once the machine is considered to be positioned to track the guidance path, the control system directs the machine to track the guidance path.

In some embodiments, tracking of the guidance path can also be carried out in a 2WS mode, a 4WS mode, and/or with a "rear axle offsets".

It will be appreciated that the control system may be configured to direct the working machine to track the guidance path by any suitable means.

Optionally, wherein the control system is configured to receive a tracking response input (e.g. a user input), wherein the tracking response input is indicative of how closely the machine is directed to track the guidance path.

In other words, the tracking response input may indicate how precisely the working machine should track the guidance path, for example, this may be at the expense of operator comfort and/or machine stability. In some embodiments, the tracking machine input may indicate that machine stability and/or operator comfort should be prioritised, for example, this may be at the expense of how closely the working machine tracks the guidance path.

In some embodiments, the tracking response input is determined based on a user input.

In this way, an operator has a degree of control over the manner in which the machine is steered when tracking the guidance path.

In other words, a machine operator can indicate a desired manner of controlling the working machine, for example in order to balance a desired riding experienced and/or stability with operational efficiency.

When the guidance path acquisition input is a user input, an operator can control when the working machine is directed to acquire a guidance path.

Optionally, wherein the control system is configured to receive a guidance path acquisition input (e.g. a user input) and wherein, in response to receiving the guidance path acquisition input, the control system is configured to direct positioning of the machine, in order to position the machine to track the guidance path.

In other words, the guidance path acquisition input may be an instruction for the control system to acquire the guidance path in an automatic steer (i.e. auto-steer) mode. In such a mode, the control system automatically controls steering of the working machine to navigate the working machine towards the guidance path.

A further aspect in accordance with the present teachings provides a working machine comprising a front axle and a rear axle, wherein the machine further comprises a control system as described herein.

It will be appreciated that the optional features described may apply to any aspect disclosed herein. All combinations contemplated are not recited explicitly for the sake of brevity.

BRIEF DESCRIPTION OF DRAWINGS

Embodiments will now be described by way of example only with reference to the accompanying figures, in which:

Figure 1 is a side view of a working machine in accordance with the present teachings;

Figure 2 is a schematic plan view of the working machine if Figure 1 fitted with front and rear implements;

Figure 3a is a schematic plan view of the working machine of Figure 2 acquiring a guidance path;

Figure 3b is a schematic plan view of the working machine of Figure 2 acquiring a guidance path;

Figure 3c is a schematic plan view of the working machine of Figure 2 acquiring a guidance path;

Figure 4 is a process diagram of for acquiring a guidance path, in accordance with an embodiment of the present teachings;

Figure 5 is a process diagram for tracking a guidance path, in accordance with an embodiment of the present teachings;

Figure 6 is schematic plan view of the working machine of Figure 2 acquiring a guidance path in a 2WS mode;

Figure 7 is a process diagram of for acquiring a guidance path in a 2WS mode, as shown in Figure 6;

Figure 8 is schematic plan view of the working machine of Figure 2 acquiring a guidance path in a 4WS mode;

Figure 9 is a process diagram of for acquiring a guidance path in a 4WS mode, as shown in Figure 8.

DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

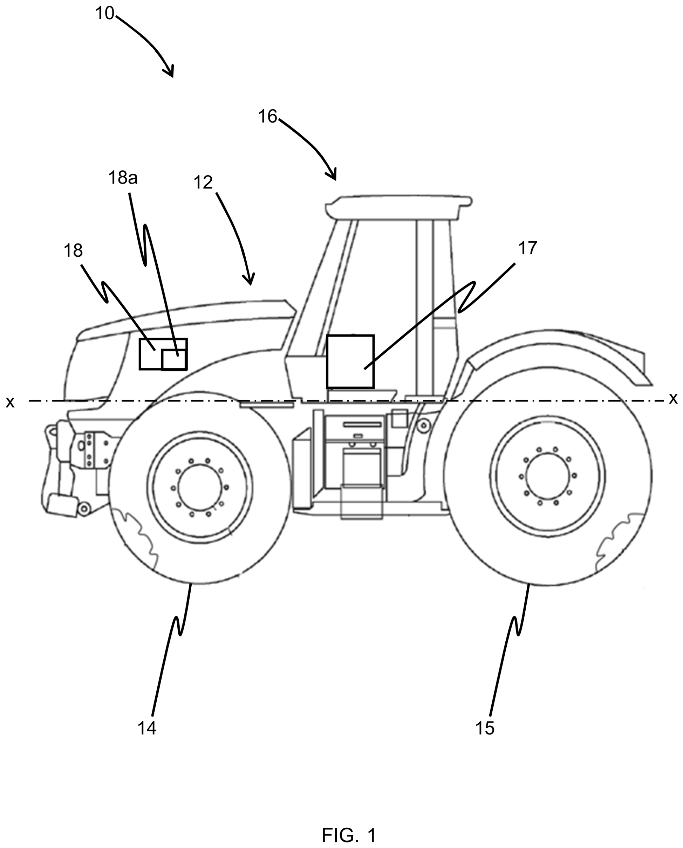

Referring firstly to Figure 1, there is shown a working machine 10 in the form of a tractor. It shall be appreciated that the present teachings may be applied to other forms of working machine 10, e.g. harvesters, sprayers, seeders, tillers, combines etc. The working machine 10 includes a body 12, a ground engaging structure 14, 15, an operator structure 16 (e.g. including a cab) and a drive arrangement (not shown).

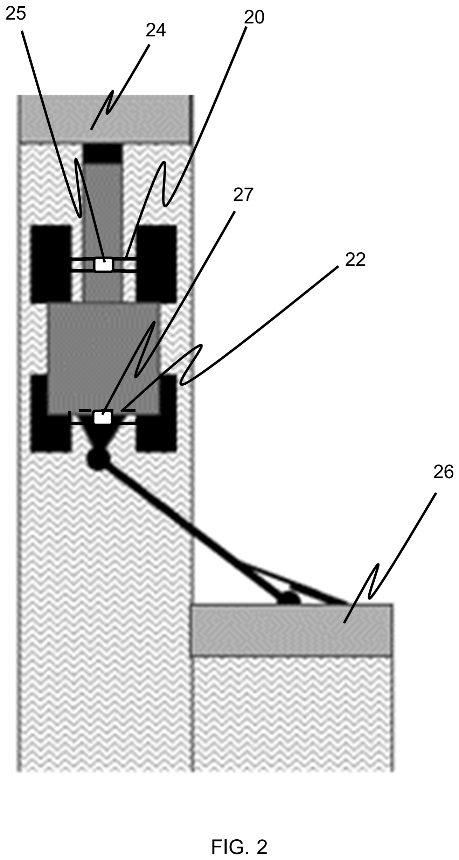

The body 12 is supported on the ground engaging propulsion structure 14, 15. The ground engaging structure 14, 15 is provided in the form of a front axle 20 (shown in Figure 2) carrying a pair of front wheels 14 and a rear axle 22 (shown in Figure 2) carrying a pair of rear wheels 15. The front and/or rear wheels 14, 15 may be steerable. Alternatively, only the front wheels 14 may be steerable, and the rear wheels 15 may be non-steerable.

In embodiments where the front and rear wheels 14,15 are steerable, the working machine 10 can be controlled to operate in a two-wheel steer (2WS) mode or four-wheel steer (4WS) mode. When operating in 2WS, a steering angle of the rear wheels 15 is set to 0° and only front wheels 14 are steered. When operating in a 4WS, both the front wheels 14 and the rear wheels 15 are steered.

The drive arrangement is provided for providing tractive power to the ground engaging structure 14, 15. The drive arrangement is mounted to the body 12, for example mounted so as to be housed within the body 12. In particular, the drive arrangement is located in front of the operator structure 16 with respect to a principal direction of travel of the working machine 10. It shall be appreciated that in alternative embodiments of working machine 10, the drive arrangement may be provided in an undercarriage of the working machine 10, or behind the operator structure 16 with respect to the principal direction of travel of the working machine 10.

The drive arrangement includes a prime mover mounted to the body 12, for example in front of the operator structure 16 with respect to the principal direction of travel. The prime mover of this embodiment is an internal combustion engine configured to run on gasoline or diesel. In alternative embodiments, the prime mover may be a gas engine configured to run on a gaseous fuel such as hydrogen or compressed natural gas, amongst others. Alternatively, the prime mover may be an electric motor, or may be a hybrid including both an internal combustion engine and an electric motor.

The operator structure 16, from which an operator can operate the working machine 10, is mounted to the body 12. In particular, the working machine 10 defines a central longitudinal axis x-x, and the operator structure 16 is located centrally with respect to the central longitudinal axis x-x.

Located within the operator structure 16 are operator controls 17, illustrated in Figure 1. For example, the operator controls 17 may include a steering wheel or joystick. The operator controls 17 can be used to turn the ground engaging wheels 14, 15 about a generally vertical axis to steer the working machine 10. The operator controls 17 may include any suitable means enabling the operator to control the working machine 2. For example, the operator controls 17 may include one or more input buttons, a touch screen configured to receive operator inputs, or any other suitable controls.

As shown in Figure 2, the working machine 10 can be fitted with a front implement 24 towards a front of the machine and a rear implement 26 towards a rear of the machine. In the illustrated embodiment, the front implement 24 is a mower and the rear implement 26 is an offset mower. In other words, the rear implement is a mower which is offset from the central longitudinal axis x-x of the working machine. However, it will be appreciated that the front and/or rear implement may be any suitable implement, for example a plough, harrow, harvester, planter, cultivator, seed drill, sprayer, rotavator, or any other suitable implement, for example, any other suitable implement which can be offset from the central longitudinal axis x-x of the working machine.

The working machine 10 includes a control system 18 configured to direct positioning of the working machine 10.

The working machine 10 also includes one or more sensors configured to provide information to the control system 18. The control system 18 is configured to determine a position and/or heading of the working machine 10 based on the information provided by the one or more sensors.

In some embodiments, the working machine 10 comprises one or more position sensors 25, 27, e.g. GPS sensors, GNSS (Global Navigation Satellite System) sensors, or any other suitable type of position sensor. The one or more position sensor is configured to provide information to the control system 18 indicative of a position in space of the respective sensor, and hence indicative of a position in space of the respective part of the machine where the sensor is located.

In some embodiments, the working machine 10 comprises two position sensors 25, 27. By providing two position sensors, the control system 18 can determine an orientation of the working machine 10, e.g. a heading of the working machine 10. Since the position in space of two points of the working machine are known, together with knowledge of the working machine (e.g. relative position of components of the machine with respect to the sensors), the working machine 10 orientation can be determined.

In the illustrated embodiment, the working machine 10 comprises two position sensors - a first position sensor 25 provided on the front axle and a second position sensor 27 provided on the rear axle. From this, a position and a heading of the working machine 10 can be determined.

The control system 18 includes a single navigation controller 18a configured to autonomously steer the working machine to track a desired path. The navigation controller 18a is configured to control front steering and rear steering independently of each other.

In some embodiments, the control system 18 includes two navigation controllers - a first navigation controller configured to control front steering of the working machine, and a second navigation controller configured to control rear steering of the working machine. In some embodiments, the first and second navigation controllers are configured to operate independently of each other.

In some embodiments, the working machine 10 includes one or more sensors configured to detect the implements fitted to the working machine 10. In this way, information related to the or each fitted implement may be obtained directly from the implements. This is described in further detail below.

When in use, it is often desirable for the working machine 10 to follow a guidance path 28 around a predetermined area (e.g. a field) in order to maximise efficiency. The guidance path 28 defines a desired path or trajectory to be tracked by the machine 10, for example the guidance path 28 may define an optimum route around an area to be worked by the machine 10, resulting in maximum efficiency.

The control system 18 is configured to navigate the working machine 10 from an off-path position towards the guidance path 28, such that the working machine 10 is navigated to a position in which the machine can track the guidance path 28.

At a high level, the control system 18 is configured to obtain or determine a guidance path 28, wherein the guidance path 28 defines a path to be tracked by the machine 10. When appropriate, e.g. when requested by user, the control system 18 is configured to navigate the working machine 10 from an off-path position towards the guidance path 28 by directing positioning of the working machine 10, such that the working machine 10 is navigated to a position in which it can then track the guidance path 28.

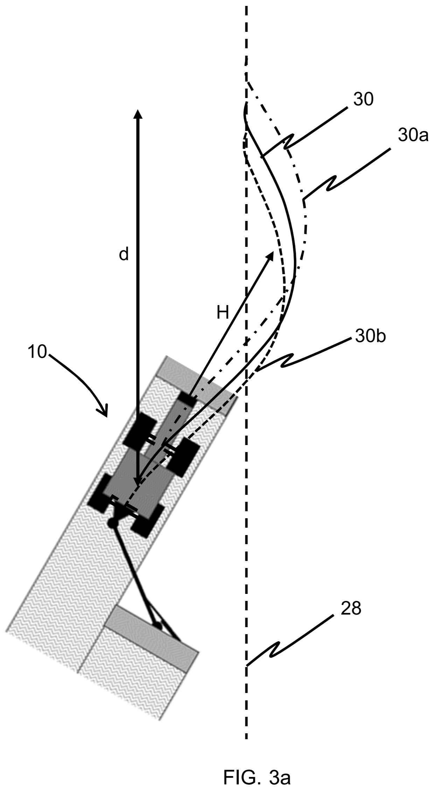

With reference to figure 3a, the working machine 10 is illustrated in an off-path position. In other words, the working machine 10 is spaced apart from the guidance path 28 such that it is not in a position in which it can track the guidance path 28. In this situation, the working machine 10 must be steered towards the guidance path 28 such that the working machine 10 is close enough to the guidance path 28 so that it can track the guidance path 28. This process is often termed "acquiring" the guidance path 28.

The control system 18 is configured to determine a position in space and a heading of the working machine 10 based on the information provided by the first and second position sensors 25, 27. The control system 18 is configured to use this position and heading information to acquire the guidance path 28, as will be described in further detail below.

The control system 18 is also configured such that, once the working machine 10 is close enough to the guidance path 28, the control system 18 is configured to autonomously direct the working machine 10 to track the guidance path 28.

In some embodiments, the control system 18 is configured to calculate the guidance path 28, for example based on a predetermined area to be worked by the working machine 10. For example, the control system 18 may be configured to take into account obstacles (e.g. trees) in the predetermined area. Information relating to such obstacles may be input by a user, e.g. via the operator controls 17, may be obtained from geographical information provided to the control system, may be obtained from sensor data, or may be obtained in any other suitable way.

In some embodiments, the guidance path 28 is calculated remotely and transmitted to the control system 18.

In some embodiments, the control system 18 is configured to obtain or determine implement information in relation to the front implement 24 and/or the rear implement 26. The control system 18 is configured to direct positioning of the machine 10 in accordance with the implement information, in order to acquire the guidance path 28.

In some embodiments, the implement information may be input by an operator, e.g. via the operator controls 17. In some embodiments, the implement information may be provided additionally or alternatively by any other suitable means, for example the working machine may comprises sensors to detect the implements fitted thereto. The implement information may be obtained directly from the implements (e.g. via the sensors), from a look up table, or from any other suitable means.

The implement information may be indicative of a position of the front implement 24 and/or a position of the rear implement 26 with respect to the machine 10. In such instances, the control system 18 may direct positioning of the machine 10 as appropriate in view of the position of the respective implement. In this way, the control system 18 can position the machine 10 such that the position of the front and/or rear implement 24, 26 with respect the guidance path 28 can be optimised. Since the front and rear implements 24, 26 are the working parts of the machine, optimising the position of the respective implement has the effect of enhancing precision of the working machine 10 when completing a given task.

In known systems, it can be difficult for a working machine to be steered such that the front and/or rear implements are appropriately placed with respect to a guidance path. For example, in some situations, whilst the working machine may be following the guidance path, one or other of the front and rear implements may not be in the optimal position for completing the required task. This can lead to suboptimal performance of the working machine when completing a given task.

In precision farming applications, it is important that any instruction to the working machine to track a guidance path is actioned in an efficient manner, in order to position the working machine (in particular a working point of the working machine) on the guidance path in the shortest distance possible. By directing positioning of the machine in accordance with the implement information that relates to a position of the front and/or rear implements, positioning of the machine can be controlled so to optimise the position of the respective implement. Since the implements comprise the working portions of the machine, precise positioning of the implements is important for maximising performance of the working machine in completing a given task.

For example, the implement information may be indicative of a position of a working point or working area of the respective implement, and/or the position of one or more axles of the respective implement. In this way, the position of the front and/or rear implement 24, 26 with respect the guidance path 28 can be optimised.

In some embodiments, the implement information may be indicative of a weight distribution of the respective implement. In such instances, the control system 18 may direct positioning of the machine 10 such that stability of the machine 10 is maintained, in view of the weight distribution of the machine 10 and implement(s) 24, 26.

In some embodiments, the implement information may be indicative of one or more dimensions of the implement, e.g. implement length and/or width. In some embodiments, the implement information may be indicative of the position of the respective working point or working area with respect to the position at which the respective implement is coupled to the machine 10.

It will be appreciated that the implement information may relate to any suitable information that may impact how the working machine should be controlled e.g. to ensure stability, optimal positioning, optimal efficiency etc.

In some embodiments, the implement information includes information relating to an implement priority input. The implement priority input is indicative of whether a position, with respect to the guidance path 28, of the front implement 24, the rear implement 26, or both the front implement 24 and the rear implement 26 is to be prioritised.

The control system 18 is configured such that: positioning the front implement 24 to track the guidance path 28 is prioritised when the implement priority input indicates that the position of the front implement 24 is to be prioritised; positioning the rear implement 26 to track the guidance path 28 is prioritised when the implement priority input indicates that the position of the rear implement 26 is to be prioritised; and positioning both the front implement 24 and rear implement 26 to respectively track the guidance path 28 is prioritised when the implement priority input indicates that the position of both the front implement 24 and the rear implement 26 is to be prioritised.

In this way, priority can be given to the implement 24, 26 that is most important e.g. for the completion of a given task.

In some cases, both the front and the rear implements 24, 26 can be prioritised when the positions of the front and rear implements 24, 26 with respect to the guidance path are both important, e.g. for completion of a given task. In other words, the control system 18 is configured to direct the machine 10 such that both the front and rear implements 24,26 acquire the guidance path 28 as efficiently as possible.

In some embodiments, the implement priority input may be user selected, e.g. via the operator controls 17. Accordingly, the user can dictate which of the implements 24,26 should be prioritised.

In some embodiments, the control system 18 is configured to direct positioning of the machine 10 by controlling a position of the front axle 20, e.g. a midpoint of the front axle 20. In some embodiments, the control system 18 is configured to direct positioning of the machine 10 by controlling a position of the rear axle 22, e.g. a midpoint of the rear axle 22. In some embodiments, the control system 18 is configured to direct positioning of the machine 10 by controlling a position of the front axle 20 and by controlling a position of the rear axle 22, wherein the position of the front axle 20 and the rear axle 22 are controlled independently.

By controlling a position of the front axle 20 and/or a position of the rear axle 22, more precise positioning of the front and/or rear axles 20, 22 can be achieved. Consequently, more precise positioning of the working machine 10 as a whole can be achieved.

Further, since the front implement 24 is positioned proximal the front axle 20, more precise positioning of the front implement 24 (i.e. a working point of the machine) can be achieved by controlling the position of the front axle 20. Similarly, since the rear implement 26 is positioned proximal the rear axle 22, more precise positioning of the rear implement 26 (i.e. a working point of the machine) can be achieved by controlling the position of the rear axle 22.

Accordingly, more precise positioning of the front and/or rear implements 24, 26 can be achieved. Since the implements 24, 26 comprise the working portions of the machine, precise positioning of the implements is important for maximising performance of the working machine in completing a given task.

Furthermore, by controlling the position of the front and/or rear axles 20, 22, the position of the respective front and rear wheels 14, 15 can be more accurately controlled, for example as compared to known systems in which a position of a centrepoint of the machine is controlled. It will be appreciated, that the front and rear wheels 14, 15 are the portions of the machine 10 that impact the ground and so precise positioning of the wheels 14, 15 is important to ensure they impact the ground at a desired location, e.g. avoiding crops or other areas of the ground that could be damaged when driven on.

In other embodiments, the control system 18 may be configured to direct positioning of the machine 10 by controlling a position of a centrepoint of the machine 10, for example, the centrepoint may be the midpoint of the machine 10 in both lateral and longitudinal directions. In some embodiments, the controller 18 may be configured to direct positioning of the machine 10 by controlling any other suitable position of the machine 10.

It will be appreciated that control of a position of any part of the working machine 10 can be achieved via knowledge of the working machine 10 (i.e. relative positions of components of the working machine) together with position information from the first and/or second sensor 25, 27.

The control system 18 may be configured to receive additional or alternative information indicative of the manner in which it is desired that the working machine 10 acquires the guidance path 28. This may be a user input, e.g. via the operator controls 17.

In some embodiments, the control system 18 is configured to receive an acquisition response input, which is indicative of the manner in which it is desired that the working machine 10 acquires the guidance path 28.

For example, the acquisition response input may indicate that the machine stability; operator riding experience; and/or distance to acquiring the guidance path 28 is to be prioritised when acquiring the guidance path 28.

The acquisition response input may be indicative of a maximum or minimum distance to acquire the guidance path 28 and/or may be indicative of a maximum or minimum turning radius that is desired when acquiring the guidance path 28.

The control system 18 may be configured to direct positioning of the machine 10 in accordance with the information indicative of the manner in which it is desired that the working machine 10 acquires the guidance path 28, e.g. in accordance with the acquisition response input.

In order to steer the working machine 10 towards the guidance path 28, the control system 18 is configured to obtain or determine an acquisition path 30. The acquisition path 30 defines a path for the machine 10 to follow in order to position the machine 10 such that it is in a suitable position to track the guidance path 28. In other words, the acquisition path 30 is a predetermined path for the machine to follow in order to "acquire" the guidance path 28. The control system 18 is configured to direct the working machine 10 to track the acquisition path 30 in order to acquire the guidance path 28.

In some embodiments, the control system 18 is configured to calculate the acquisition path 30. In other embodiments, the acquisition path is calculated remotely and transmitted to the control system 18.

By directing positioning of the working machine 10 in accordance with an acquisition path 28, more predictable steering of the working machine 10 can be achieved. In other words, by calculating an acquisition path 28, improved repeatability of how the machine 10 is controlled can be achieved. This is advantageous to the operator in providing more predictable and precise operation of the working machine 10.

The acquisition path 30 may be calculated based on a number of variables, for example user selected variables. Accordingly, having a control system 18 that obtains or determines an acquisition path 28 and then uses this to direct the working machine 10 enables such variables to be taken into account when navigating the working machine 10 towards the guidance path 28.

In some embodiments, the acquisition path 30 is calculated based on the implement information. In this way, the path followed by the working machine 10 to acquire the guidance path 28 can be optimised based on the implement information.

In some embodiments, the acquisition path 30 is calculated based on information indicative of the manner in which it is desired that the working machine 10 acquires the guidance path 28, e.g. the acquisition response input. In this way, a desired manner in which the machine 10 is navigated to the guidance path can be achieved, whilst also optimising operational efficiency of the working machine 10. In other words, the acquisition path 30 can be optimised such that the working machine 10 is navigated in a desired manner, whilst enabling guidance path acquisition as efficiently as possible.

For example, in some embodiments, navigating the machine 10 such that a smooth ride for the operator is achieved may be prioritised e.g. potentially at the expense of the distance to acquire the guidance path 28. In some embodiments, navigating the machine 10 such that maximum machine stability is achieved may be prioritised e.g. potentially at the expense of the distance to acquire the guidance path 28. In some embodiments, navigating the machine 10 such that acquisition of the guidance path is achieved in the minimum distance possible may be the priority, e.g. potentially at the expense of how smooth the ride is for the operator and/or machine stability.

In some embodiments, having an acquisition path 30 which has a relatively small minimum radius of curvature may reduce how smooth the riding experience is for the operator and/or reduce machine stability. However, this may enable the working machine 10 to acquire the guidance path more quickly. Conversely, in embodiments where the acquisition path 30 has a relatively large minimum radius of curvature, the riding experience for the operator and/or machine stability may be enhanced. However, this may be at the expense of the time and/or distance for the machine 10 to acquire the guidance path.

In some embodiments, guidance path acquisition in the minimum distance possible may reduce how smooth the riding experience is for the operator and/or reduce machine stability.

In some embodiments, a more gentle manner of guidance path acquisition and/or guidance path acquisition with increased stability may be preferred. This may be desired for operator comfort and/or for machine stability, for example, in cases where the working machine 10 is fitted with a relatively large front and/or rear implement 24, 26.

A more gentle manner of guidance path acquisition and/or guidance path acquisition with increased stability may be achieved by carrying out guidance path acquisition over a longer distance and/or with a larger minimum radius of curvature. In other words, the acquisition path 30 may be longer and/or may define a larger minimum radius of curvature.

The control system 18 is configured to use a mathematical method to calculate the acquisition path 30.

Use of such a method enables real-time calculation and optimisation of the acquisition path 30.

In some embodiments, the mathematical method is a clothoid fitting method. This is a known method of interpolation to create a line (in this case the acquisition path 30) connecting two known points having known respective headings at each point, using the shortest line possible (i.e. the shortest clothoid curve possible).

In determining the acquisition path, a start point, a heading at the start point, an end point, and a heading at the end point are considered.

The "start point" will be understood to mean the off-track position of the machine. This can be determined based on the information provided by the first and/or second position sensors 25, 27.

The "heading at the start point" will be understood to mean the heading of the machine 10 when in the off-track position. This can be determined based on the information provided by the first and second position sensors 25, 27, together with knowledge of the working machine (e.g. relative position of components of the machine with respect to the sensors).

The "end point" will be understood to mean a position at which the working machine 10 is positioned to track the guidance path 28.

The "heading at the end point" will be understood to mean a desired heading of the machine when it is positioned at the "end point".

The clothoid fitting method firstly involves determining information about the start and end points and respective headings, such as the shortest straight-line distance between the start and end points, and the angular difference between the headings at the respective points. These parameters are then used to calculate a clothoid curve (also known as an Euler spiral) to smoothly connect the start and end points together.

An optimal clothoid curve is calculated using the Newton Raphson iterative method to find the roots of the Euler spiral equations which result in the optimal clothoid curve (e.g. of the shortest length). This method determines parameters of the optimal clothoid curve, specifically the initial curvature of the spiral, the rate of change of the curvature of the spiral, and the overall length of the spiral.

Fresnel integration of the calculated optimal clothoid curve is then carried out to obtain the desired number of navigation co-ordinates along the calculated optimal clothoid curve. This is then taken to be the calculated acquisition path, which the navigation controller 18a uses to navigate the machine.

The use of a clothoid fitting method is particularly beneficial since it enables the generation of a smooth path for the machine to acquire the guidance path. Further details of suitable clothoid fitting methods can be found in the following documents, which are hereby incorporated by reference:

- Brezak, M. and Petrovic, I. (2011) 'Path Smoothing Using Clothoids for Differential Drive Mobile Robots', Proc. of the 18th IFAC World Congress, 2011, vol. 44, no. 1, pp. 1133-1138;
- Bertolazzi, E. and Frego, M. (2013) 'Fast and accurate G1 fitting of clothoid curves' (available at https:/ /www.researchgate.net/publ ication/237062806_Fast_and_accurate _G1_fitting_of_clothoid_curves and via the wayback machine internet archive); and
- Bertolazzi, E. and Frego, M. (2015) 'G1 fitting with Clothoids', Math. Meth. Appl. Sci. 2015, 38 881-897.

In some embodiments, the mathematical method is a model predictive control (MPC) method.

It will be appreciated that any suitable mathematical model may be used to calculate the acquisition path 30.

The control system 18 may be configured to calculate the acquisition path taking into account the implement information. For example, the acquisition path 30 may be calculated taking into account the implement priority input. In this way, the control system 18 is configured to direct positioning of the machine 10 in accordance with the implement information. The implement information (e.g. implement priority input) may be a user input.

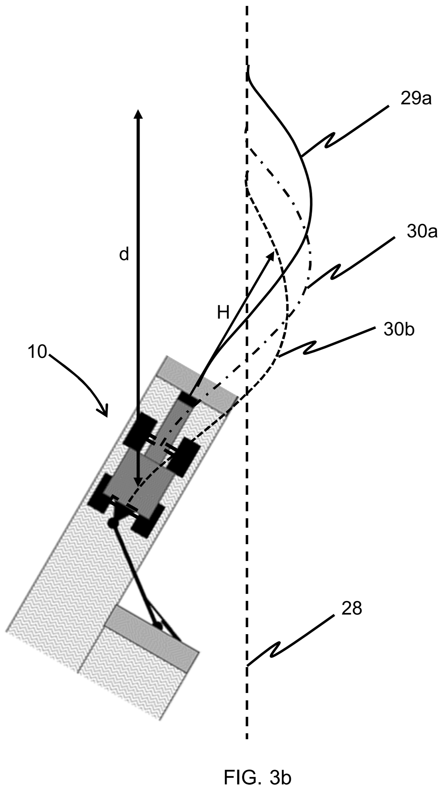

In some embodiments, where positioning the front implement 24 to track the guidance path 28 is prioritised (i.e. when the implement priority input indicates that the position of the front implement 24 is to be prioritised), the control system 18 may calculate an optimal acquisition path 29a (see Fig. 3b) for the front implement 24 to follow to acquire the guidance path 28. Herein, this will be termed the "front implement acquisition path".

In some embodiments, the control system 18 uses this front implement acquisition path 29a and extrapolates from this an acquisition path 30 which describes the path to be followed by a centre of the machine 10. The machine can then be controlled to track the extrapolated acquisition path 30.

In some embodiments, a front acquisition path 30a, to be followed by the front axle 20, and a rear acquisition path 30b, to be followed by the rear axle 22, can be extrapolated from the central acquisition path 30 (see Figure 3a).

In some embodiments, the control system 18 uses the front implement acquisition path 29a and extrapolates directly from this a front acquisition path 30a, to be followed by the front axle 20, and a rear acquisition path 30b, to be followed by the rear axle 22 (see Figure 3b).

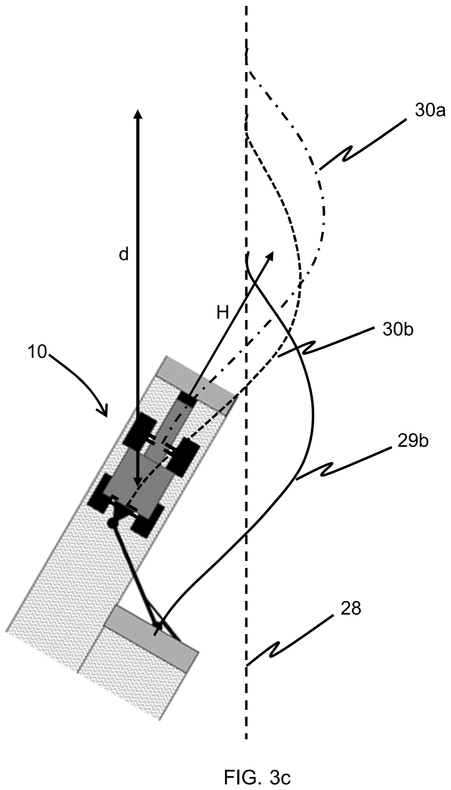

In some embodiments, where positioning the rear implement 26 to track the guidance path 28 is prioritised (i.e. when the implement priority input indicates that the position of the rear implement 26 is to be prioritised), the control system 18 may calculate an optimal acquisition path 29b (see Fig. 3c) for the rear implement 26 to follow to acquire the guidance path 28.

In some embodiments, the control system 18 uses this rear implement acquisition path 29b and extrapolates from this an acquisition path 30 which describes the path to be followed by a centre of the machine 10. The machine can then be controlled to track the extrapolated acquisition path 30.

In some embodiments, a front acquisition path 30a, to be followed by the front axle 20, and a rear acquisition path 30b, to be followed by the rear axle 22, can be extrapolated from the (central) acquisition path 30.

In some embodiments, the control system 18 uses this rear implement acquisition path 29a and extrapolates directly from this a front acquisition path 30a, to be followed by the front axle 20, and a rear acquisition path 30b, to be followed by the rear axle 22 (see Figure 3c).

By determining the acquisition path(s) used to navigate the machine 10 based on an acquisition path of the working point of the or each implement, this enables the working point of the machine to be more accurately and efficiently guided to the guidance path 28. In this way, the machine 10 (and hence the implement(s)) is positioned to carry out a required task as efficiently as possible.

In some embodiments, where positioning both the front implement 24 and rear implement 26 to respectively track the guidance path 28 is prioritised (i.e. when the implement priority input indicates that the position of both the front implement 24 and the rear implement 26 is to be prioritised), the control system 18 may calculate an optimal acquisition path 29a (see Fig. 3b) for the front implement 24 to follow to acquire the guidance path 28 and an optimal acquisition path 29b (see Fig. 3c) for the rear implement 26 to follow to acquire the guidance path 28.

The optimal implement acquisition paths 29a,b for the front and rear implements 24,26 are then used to calculate a combined acquisition path or paths, which represent the optimal acquisition path(s) for getting the working points of both implements on the guidance path. Any suitable method for obtaining optimal combined acquisition path(s) can be used.

It will be appreciated that the implement acquisition paths 29a,b determine the optimum paths for each respective implement to acquire the guidance path 28. In some embodiments, an iterative method is used to modify the implement acquisition paths 29a,b such that they are optimised to provide acquisition paths for which both implements acquire the guidance path 28 in the shortest possible distance.

In some embodiments, the combined acquisition path(s) may be a single acquisition path 30, which describes the path to be followed by a centre of the machine 10. The machine can then be controlled to track the combined acquisition path 30. In some embodiments, a front acquisition path 30a, to be followed by the front axle 20, and a rear acquisition path 30b, to be followed by the rear axle 22, can be extrapolated from the combined central acquisition path 30.

In some embodiments, the(each) combined acquisition path(s) can be calculated by determining the point at which the front implement heading error to the guidance path 28 is within a predetermined acceptable error range, and the rear implement has acquired the guidance path 28. An iterative method can be used to determine this.

In some embodiments, an approximate method for determining the(each) combined acquisition path(s), which represents the optimal acquisition path(s) for getting the working points of both implements on the guidance path, can be used. For example, the respective implement acquisition paths 29a,b can be extended by a predetermined length (e.g. half a machine length) and the resulting acquisition paths used to determine the combined acquisition path(s). This has been found to be a simple method of prioritising both implements, whilst keeping the processor power required to a minimum.

In some embodiments, the combined acquisition path(s) may include a modified front implement acquisition path and a modified rear implement acquisition path. In some embodiments, the control system 18 uses the modified front implement acquisition path and/or the modified rear implement acquisition path and extrapolates directly from this a front acquisition path 30a, to be followed by the front axle 20, and/or a rear acquisition path 30b, to be followed by the rear axle 22.

It will be appreciated that any suitable acquisition path can be extrapolated from the front and/or rear implement acquisition paths 29a,b, using knowledge of the dimensions of the machine and implements. In this way, accurate positioning of the working point or part of the respective implement can be achieved.

It will be appreciated that the acquisition paths illustrated in Figures 3a-c are for illustrative purposes only and are not provided to scale.

The control system 18 may be configured to calculate the acquisition path 30 based on the information indicative of the manner in which it is desired that the working machine 10 acquires the guidance path (e.g. acquisition response input). In particular, the information indicative of the manner in which it is desired that the working machine 10 acquires the guidance path (e.g. acquisition response input) may also be fed into the mathematical method. In this way, the control system 18 is configured to direct positioning of the machine term in accordance with the desired manner of acquisition.

The acquisition response input may be indicative of a desired attribute of the acquisition path 30. For example, the desired attribute may include one or more of the following: a maximum length of the acquisition path 30 e.g. in a direction along the guidance path 28, a minimum length of the acquisition path 30 e.g. in a direction along the guidance path 28, a maximum radius of curvature of the acquisition path 30, a minimum radius of catch curvature of the acquisition path 30.

In the embodiment illustrated in figure 3a, the acquisition path 30 is calculated with reference to a centrepoint of the working machine 10. In other words, the acquisition path 30 defines a path for the centrepoint of the machine 10 to follow in order to navigate to the guidance path 28.

In other embodiments, the acquisition path may be calculated with reference to any suitable point of the working machine 10. For example, an acquisition path may be calculated with reference to a midpoint of the front axle 20, which will be described in more detail below. For example an acquisition path may be calculated with reference to a midpoint of the rear axle 22, which will also be described in more detail below.

The control system 18 is configured to calculate a steering angle based on the acquisition path 30. In other words, the control system 18 is configured to calculate a steering angle required for the working machine 10 to track the acquisition path 30.

When operating in a 2WS mode, a steering angle of the rear wheels 15 (i.e. a rear steering angle) is set to 0° and the control system 18 is configured to determine a steering angle of the front wheels 14 (i.e. a front steering angle).

When operating in a 4WS mode, the control system 18 is configured to determine a steering angle of the front wheels 14 and a steering angle of the rear wheels 15. Furthermore, the control system 18 is configured to determine the steering angle of the front wheels 14 independently of the steering angle of the rear wheels 15, i.e. the control system 18 is configured to determine the front steering angle independently of the rear steering angle. By calculating the steering angle of the front and rear wheels independently of each other, greater flexibility in the way in which the machine 10 is manoeuvred can be achieved. For example, independent calculations in this way enable additional modes, such as crab or offset steering modes, to be achieved. For example, a crab steering mode can be desirable in spreading out the contact area of the wheels on the ground, which is particularly beneficial in wet conditions.

In some embodiments it may be desirable for the steering angle of the rear wheels to be proportional, e.g. directly proportional to the steering angle of the front wheels. For example, the front steering angle and the rear steering angle may both be the same percentage of the maximum steering angle available. In some cases, the maximum steering angle of the front wheels may be different, e.g. larger, than the maximum steering angle of the rear wheels. For example, the maximum steering angle of the front wheels may be $\pm60°$ from the longitudinal axis of the machine and the maximum steering angle of the rear wheels may be $\pm50°$. The steering angle of both the front and rear wheels may be set to +80%, such that the steering angle of the front wheels is 48° and the steering angle of the rear wheels is 40°.

In some embodiments, the control system 18 is configured to calculate a steering angle based on one or more variables. When the machine 10 is navigated to track the acquisition path, the one or more variables may include: a heading error determined based on a heading H of the machine 10 with respect to the acquisition path 30; a cross-track error determined based on the lateral position of the machine 10 with respect to the acquisition path 30; a yaw rate error determined based on the rate of change of the machine heading error; and/or a steering angle error determined based on a steering angle of the machine with respect to the acquisition path.

As used herein, the term "heading" will be understood to mean the direction in which the working machine 10 is pointing at a given time. Accordingly, the heading error, when tracking the acquisition path 30, will be understood to relate to the difference between the machine heading H and the acquisition path 30. The term heading may also be referred to as vehicle "yaw". The working machine 10 "heading" can determined based on the information provided by the first and second position sensors 25, 27, together with knowledge of the working machine (e.g. relative position of components of the machine with respect to the sensors).

As used herein, the term "cross-track error" will be understood to mean a lateral distance between a current position of a given point of the working machine and the acquisition path 30, when tracking the acquisition path 30. The "cross-track error" is determined based on position of the working machine, which can be determined based on information provided by the first and/or second position sensors 25, 27.

As used herein, the term "yaw rate" will be understood to mean the rate of change of the machine heading. Accordingly, when tracking the acquisition path 30, the yaw rate error will be understood to relate to a rate of change of the machine heading as compared to the acquisition path 30.

As used herein, the term "steering angle error" will be understood to relate to a difference between the actual steering angle and a desired steering angle based on the calculated acquisition path 30, when tracking the acquisition path 30.

In some embodiments, the steering angle may in addition or alternatively be calculated based on a steering angle gradient. This takes into account the steering angle previously calculated and used to direct steering of the machine, and the actual rate of change of the steering angle physically achievable by the machine. For example, the control system 18 may be configured to calculate and update the steering angle every 0.05s (or any other suitable time frame), whereas the time required for the steering angle of the wheels to physically change will be much longer than this. Therefore, the steering angle gradient is indicative of the steering angle previously directed and and projects where this will position the machine 10 in the future. This can be advantageous in dampening the steering control of the working machine 10 in order to increase stability.

In some embodiments, the control system 18 is configured to calculate the steering angle based on one or more of the following variables: a heading error gain, which applies a weighting to the heading area variable; a cross-track error gain, which applies a weighting to the cross track error variable; a yaw rate error gain, which applies a weighting to the yaw rate error variable; and/or a steering angle error gain, which applies a weighting to the steering angle error variable.

One or more of the variables may be adjustable, such that the calculation of the steering angle is tunable. For example one or more of the heading error gain, the cross track error gain, the yaw rate error gain and/or the steering angle gain may be adjustable. For example one or more of the variables may be tunable or manipulated based upon different control variables e.g. the acquisition path (i.e. desired) yaw rate, vehicle speed, suspension load, draft force or any other suitable control variable.

An exemplary algorithm for calculating the steering angle is provided at (1) below:

$$
\begin{aligned}
\textit{Desired Steer Angle}(degrees) \\
&= (HeadngError(degrees) \times Heading\ gain) \\
&+ (atan2(CrossTrackError,\ vehicle\ speed) \times CrossTrackError\ gain) \\
&+ (YawRateError \times YawRate\ gain) \\
&+ (steeringAngleGradient \times steeringAngleGradient\ gain)
\end{aligned}
$$

$$(1)$$

As indicated above, the control system 18 may be configured to calculate a front steering angle for the front wheels 14 and/or a rear steering angle of the rear wheels 15. Where both a front steering angle and a rear steering angle is calculated by the control system 18, these may be calculated independently, for example using separate instances of the above algorithm (1).

The navigation controller 18a is configured to steer the working machine 10 in accordance with the calculated steering angle(s).

Other suitable methods of steering control which may be used include model predictive control (MPC) methods, the pure pursuit tracking algorithm, the Stanley tracking algorithm, and/or any other suitable method.

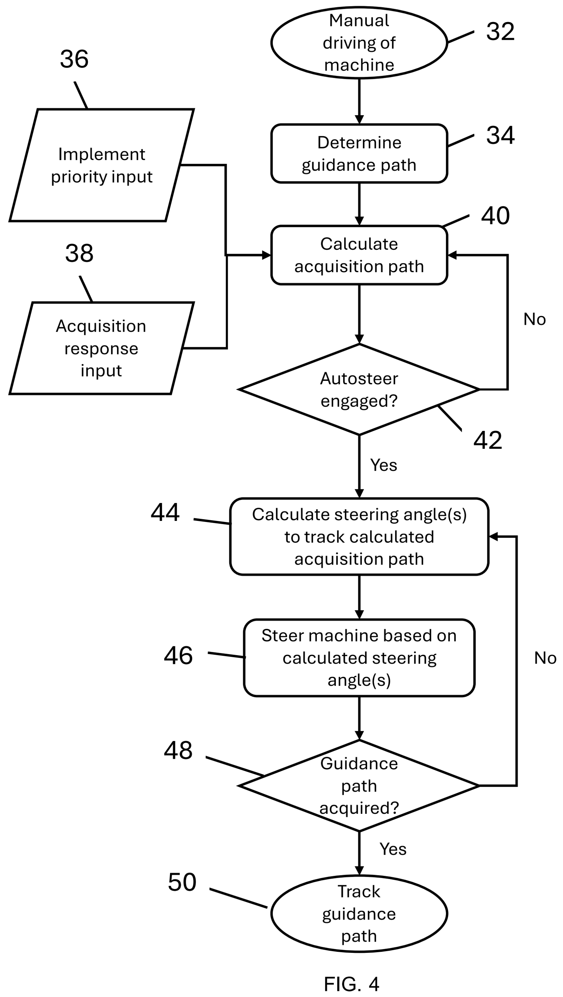

With reference to figure 4, the process for guidance path acquisition carried out by the control system 18 is illustrated. Initially, the working machine 10 is driven manually by an operator 32. During this time, the control system 18 obtains or determines 34 a guidance path 28, as described above.

In the embodiment of Figure 4, the control system 18 is configured to receive information indicative of an implement priority input 36 and information indicative of an acquisition response input 38. The control system 18 is configured to calculate 40 the acquisition path 30 in accordance with the implement priority input and the acquisition response input. This is carried out in real time whilst the working machine 10 is in use, using a mathematical model (e.g. the clothoid fitting method detailed above).

The acquisition path 30 is calculated to optimise acquisition of the guidance path 28 by the working machine 10. For example, the acquisition path 30 may be calculated to minimise the distance travelled by the working machine 10, in a direction along the guidance path 28, required to acquire the guidance path 28. In the illustrated embodiment of figure 3a, the acquisition path 30 is calculated with reference to a centrepoint of the working machine 10.

The control system 18 is configured to receive a guidance path acquisition input and the control system 18 is configured to monitor for this input when the machine is being manually driven.

When the control system 18 receives the guidance path acquisition input 42, this indicates a direction to engage auto-steer of the machine 10. As used herein, the term "auto-steer" will be understood to mean self-driving mode in which the control system 18 controls driving of the working machine 10. When auto-steer has been engaged, the control system 18 automatically controls steering of the working machine 10 to navigate the working machine 10 towards the guidance path 28.

The guidance path acquisition input may be a user input, e.g. via the operator controls 17.

Once auto-steer has been engaged, the control system 18 calculates a steering angle 44 of the machine 10 which is required to track the calculated acquisition path 30. In the illustrated embodiment of figure 3a, the steering angle required for the centrepoint of the working machine 10 to track the acquisition path 30 is calculated.

The steering angle is calculated using a steering algorithm, as described above. The control system 18 (e.g. the navigation controller 18a) then directs the working machine 10 to be steered based on the calculated steering angle 46.

In this way, the control system 18 directs the working machine 10 to follow the calculated acquisition path 30, such that the machine 10 is navigated to a position in which it can then track the guidance path 28.

The control system 18 monitors for when the guidance path 28 has been acquired 48. Once the guidance path 28 has been acquired, the control system 18 directs the working machine 10 to track 50 the guidance path 28. If the guidance path 28 has not yet been acquired, the control system 18 continues to direct the working machine 10 to follow the acquisition path 30 until the guidance path 28 is acquired.

The control system 18 is configured such that the working machine 10 is considered to have acquired the guidance path 28 when the working machine 10 is positioned within a predetermined boundary with respect to the guidance path 28. For example, the predetermined boundary may include a predetermined heading error boundary and/or a predetermined cross track error boundary.

In some embodiments, control system 18 is configured such that the working machine 10 is considered to have acquired the guidance path 28 when the front and/or rear implement 24, 26 is positioned within a predetermined boundary with respect to the guidance path 28. For example, the predetermined boundary may include a predetermined heading error boundary and/or a predetermined cross track error boundary.

The control system 18 is configured such that, once the machine 10 is considered to have acquired the guidance path 28, the control system 18 directs the machine 10 to track the guidance path 28. In other words, once the machine 10 is considered to be in a position to track the guidance path 28, the control system directs the machine 10 to follow the guidance path 28.

The control system 18 may be configured to direct the machine 10 to track the guidance path 28 using any suitable method, for example those methods known in the art. In some embodiments, tracking of the guidance path 28 can also be carried out in a 2WS mode, a 4WS mode, and/or with a "rear axle offsets".

As described above, the control system 18 is configured to determine a position in space and heading of the working machine 10 based on the information provided by the first and second position sensors 25, 27. The control system 18 is configured to use this position and heading information to track the guidance path 28, using any suitable tracking algorithm.

For example, the control system 18 is configured to calculate a steering angle based on one or more variables.

When the machine 10 is navigated to track the guidance path 28, the one or more variables may include: a heading error determined based on a heading H of the machine 10 with respect to the guidance path 28; a cross-track error determined based on the lateral position of the machine 10 with respect to the guidance path 28; a yaw rate error determined based on the rate of change of the machine heading error; and/or a steering angle error determined based on a steering angle of the machine with respect to the guidance path 28.

As used herein, the term "heading" will be understood to mean the direction in which the working machine 10 is pointing at a given time. Accordingly, the heading error, when tracking the guidance path 28, will be understood to relate to the difference between the machine heading H and the guidance path 28. The term heading may also be referred to as vehicle "yaw". The working machine 10 "heading" can determined based on the information provided by the first and second position sensors 25, 27, together with knowledge of the working machine (e.g. relative position of components of the machine with respect to the sensors).

As used herein, the term "cross-track error" will be understood to mean a lateral distance between a current position of a given point of the working machine and the guidance path 28, when tracking the guidance path 28. The "cross-track error" is determined based on position of the working machine, which can be determined based on information provided by the first and/or second position sensors 25, 27.

As used herein, the term "yaw rate" will be understood to mean the rate of change of the machine heading. Accordingly, when tracking the guidance path 28, the yaw rate error will be understood to relate to a rate of change of the machine heading as compared to the guidance path 28.

As used herein, the term "steering angle error" will be understood to relate to a difference between the actual steering angle and a desired steering angle based on the calculated guidance path 28, when tracking the guidance path 28.

In some embodiments, the steering angle may in addition or alternatively be calculated based on a steering angle gradient, which takes into account the steering angle previously calculated and used to direct steering of the machine, and the actual rate of change of the steering angle physically achievable by the machine, as described above.

In some embodiments, the control system 18 is configured to calculate the steering angle based on one or more of the following variables: a heading error gain, which applies a weighting to the heading area variable; a cross-track error gain, which applies a weighting to the cross track error variable; a yaw rate error gain, which applies a weighting to the yaw rate error variable; and/or a steering angle error gain, which applies a weighting to the steering angle error variable.

One or more of the variables may be adjustable, such that the calculation of the steering angle is tunable. For example one or more of the heading error gain, the cross track error gain, the yaw rate error gain and/or the steering angle gain may be adjustable. For example one or more of the variables may be tunable or manipulated based upon different control variables e.g. the acquisition path (i.e. desired) yaw rate, vehicle speed, suspension load, draft force or any other suitable control variable.

The exemplary algorithm for calculating the steering angle provided at (1) above may be used to track the guidance path 28.

Other suitable methods of steering control which may be used include model predictive control (MPC) methods, the pure pursuit tracking algorithm, the Stanley tracking algorithm, and/or any other suitable method.

In some embodiments, the control system 18 is configured to receive information indicative of the manner in which it is desired for the working machine 10 to follow the guidance path 28. For example, the control system 18 may be configured to receive a tracking response input indicative of how closely the machine 10 is directed to track the guidance path 28. In this way, the precision with which the working machine 10 tracks for guidance path 28 can be balanced against the driving experience e.g. comfort of the operator and/or machine stability, for example.

For example, a desired manner in which the working machine 10 is to follow the guidance path 28 may be achieved by placing a limit on the rate of change of the steering angle directed by the control system. For example, when the limit on the rate of change of the steering angle is lower, this will prevent harsh changes in steering angle and so will result in a more comfortable ride for the operator. However, this is likely to lead to a decrease in the guidance path tracking accuracy, particularly at high speed. On the other hand, when the limit on the rate of change of the steering angle is higher, the steering system can move at large rates of change, which tends to increase guidance path tracking accuracy, however this can cause undesirable dynamics in some machine implement configurations.

The tracking response input may be a user input , e.g. via the operator controls 17.

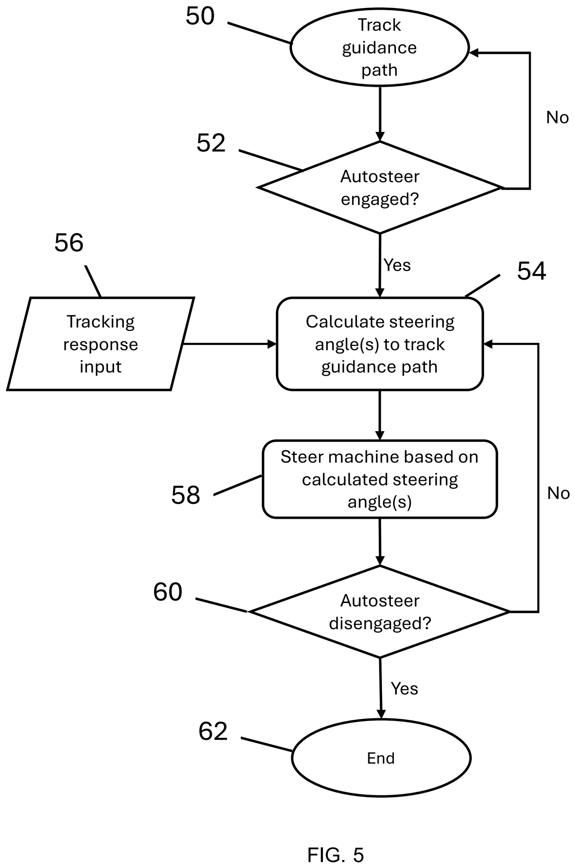

Figure 5 illustrates a process for guidance path tracking which is followed by the control system 18. Once it has been determined that the guidance path 28 has been acquired, the control system 18 moves on to the guidance path tracking process 50. Initially, the control system 18 monitors for whether auto-steer has been engaged 52, e.g. whether an operator has indicated via the operator controls 17 that the control system 18 is to direct steering of the machine 10.

If auto-steer has been engaged, the control system 18 calculates the steering angle required to track the guidance path 54. The control system 18 is configured to receive a tracking response input 56 and to use this as an input in calculating the steering angle required to track the guidance path 54. In some embodiments, the tracking response input indicates how smoothly the working machine will move whilst tracking the guidance path, e.g. to maintain machine stability.

In other embodiments, the tracking response input indicates how closely the working machine will follow the tracking guidance path. It will be appreciated that any suitable means for calculating the steering angle based on the tracking response input may be used, as described above.

The control system 18 then directs the machine 10 to be steered based on the calculated steering angle 58 until auto-steer is disengaged 60 and the process ends 62.

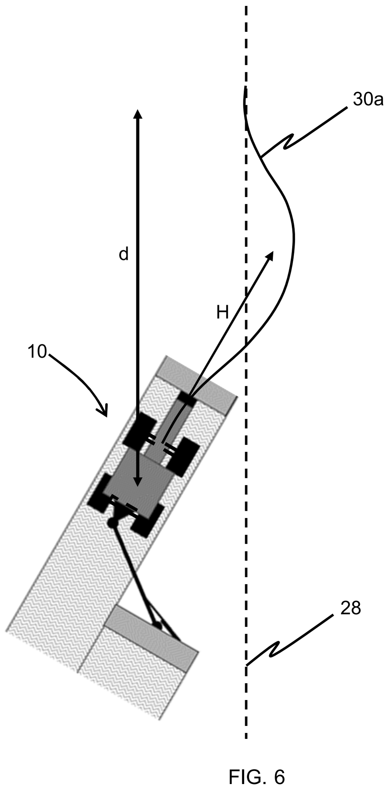

With reference to figure 6, in some embodiments, obtaining or determining the acquisition path includes obtaining or determining a front acquisition path 30a. The front acquisition path 30a defines a path for positioning the front axle 20 of the machine 10, e.g. a centrepoint of the front axle of the machine 10. The control system 18 is configured to direct positioning of the front axle 20 of the machine 10 such that the front axle 20 is directed to follow the front acquisition path 30a.

Since the front implement 24 is positioned proximal the front axle 20, more precise positioning of the front implement 24 (i.e. a working point of the machine) can be achieved by controlling the positioning of the front axle 20 to follow the front acquisition path 30a.

Furthermore, by controlling the position of the front axle, the position of front wheels 14 of the machine can be more accurately controlled, for example as compared to where a position of a centrepoint of the machine 10 is controlled. It will be appreciated that the wheels 14 are the portions of the machine 10 that impact the ground and so precise positioning of the wheels 14 is important to ensure they impact the ground at a desired location, e.g. avoiding crops or other areas of the ground that could be damaged when driven on.

In some embodiments, the working machine 10 is operated in a 2WS mode. In such a steering mode, a steering angle of the rear wheels 15 (i.e. a rear steering angle) may be set to 0° and the control system 18 may be configured to determine a steering angle of the front wheels 14 (i.e. a front steering angle) such that the front axle 20 is directed to follow the front acquisition path 30a. The front steering angle may be determined as described above, e.g. using algorithm (1). In other embodiments, any suitable means for calculating the front steering angle may be used.

In some embodiments, the control system 18 is configured to initially calculate a principal acquisition path (e.g. the acquisition path 30 illustrated in Figure 3a). In the embodiment illustrated in Figure 3a, the principal acquisition path 30 defines a path for the machine (e.g. a centre point of the machine) to follow in order to navigate to the guidance path 28. The control system 18 then uses this principal acquisition path 30 and extrapolates from this the front acquisition path 30a, for the front axle 20 to follow. This is carried out based on known dimensions of the working machine 10, using any suitable method.

In some embodiments, where positioning the front implement 24 to track the guidance path 28 is prioritised (i.e. when the implement priority input indicates that the position of the front implement 24 is to be prioritised), the control system 18 may calculate the optimal acquisition path 29a for the front implement 24 to acquire the guidance path 28 (see Figure 3b). The control system 18 then uses this front implement acquisition path 29a and extrapolates from this the front acquisition path 30a (i.e. the acquisition path 30a for the front axle to follow). In this case, the "front implement acquisition path 29a" can be notionally thought of as the "principal acquisition path". The extrapolation to determine the front acquisition path 30a is carried out based on known dimensions of the working machine 10, using any suitable method.

In some embodiments, where positioning the rear implement 26 to track the guidance path 28 is prioritised (i.e. when the implement priority input indicates that the position of the rear implement 26 is to be prioritised), the control system 18 may calculate the optimal acquisition path 29b for the rear implement 26 to acquire the guidance path 28. The control system 18 then uses this rear implement acquisition path 29b and extrapolates from this the front acquisition path 30a (i.e. the acquisition path 30a for the front axle to follow). In this case, the "rear implement acquisition path 29b" can be notionally thought of as the "principal acquisition path". The extrapolation to determine the front acquisition path 30a is carried out based on known dimensions of the working machine 10, using any suitable method.

In some embodiments, where positioning both the front implement 24 and rear implement 26 to respectively track the guidance path 28 is prioritised (i.e. when the implement priority input indicates that the position of both the front implement 24 and the rear implement 26 is to be prioritised), the control system 18 may calculate a combined acquisition path or paths, which represent the optimal acquisition path(s) for getting the working points of both implements on the guidance path (as described above). In this case, the "combined implement acquisition path(s)" can be notionally thought of as the "principal acquisition path". The extrapolation to determine the front acquisition path 30a is carried out based on known dimensions of the working machine 10, using any suitable method.

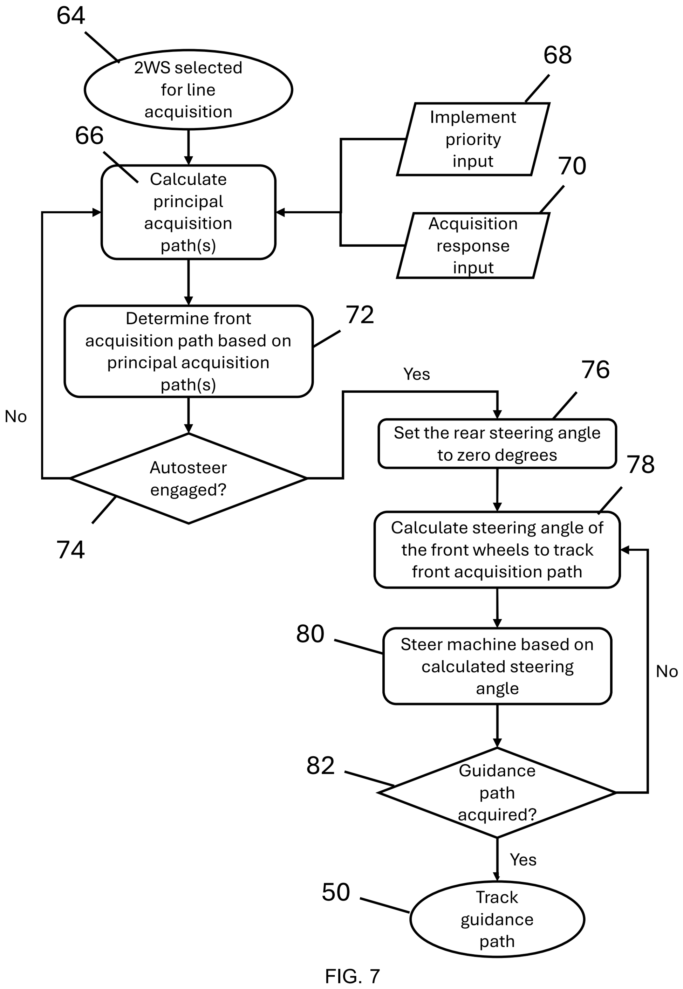

Figure 7 illustrates an embodiment of a process followed by the control system 18 when a 2WS mode is selected for guidance path acquisition 64, e.g. via the operator controls 17. Once the 2WS mode is selected for guidance path acquisition 64, the control system 18 calculates the principal acquisition path(s) 66. This is calculated based on an implement priority input 68 and an acquisition response input 70 received by the control system 18, in a similar manner as described above in relation to Figure 4.

The control system 18 then determines a front acquisition path (i.e. an acquisition path for the front axle to be steered to) based on the principal acquisition path(s) calculated 72.

As described above, the control system 18 is configured to receive a guidance path acquisition input, e.g. via the operator controls 17, and the control system 18 is configured to monitor for this input when the machine is being manually driven. When the control system receives the guidance path acquisition input, this indicates a direction to engage auto-steer of the machine 74.

Once auto-steer has been engaged, the control system sets the rear steering angle to 0° 76 and calculates a steering angle of the front wheels 14 required to track the front acquisition path 78. The control system 18 then directs the front wheels 14 of the machine to be steered based on the calculated front steering angle 80.

In this way, the control system 18 directs the position of the front axle 20 to follow the front acquisition path 30a, so that the machine 10 is navigated into a position to track the guidance path 28.

The control system 18 monitors for when the guidance path 28 has been acquired 82. Once the guidance path 28 has been acquired, the control system 18 directs the working machine 10 to track 50 the guidance path 28. If the guidance path 28 has not yet been acquired, the control system 18 continues to direct the working machine 10 to follow the front acquisition path 30a until the guidance path 28 is acquired.

The guidance path can then be tracked as described above, for example in relation to figure 5.

In some embodiments, obtaining or determining the acquisition path includes obtaining or determining a rear acquisition path 30b. The rear acquisition path 30b defines a path for positioning the rear axle 22 of the machine 10, e.g. a centrepoint of the rear axle 22 of the machine 10. The control system 18 is configured to direct positioning of the rear axle 22 such that the rear axle is directed to follow the rear acquisition path 30b.

Since the rear implement 26 is positioned proximal the rear axle 22, more precise positioning of the rear implement 26 (i.e. a working point of the machine) can be achieved.

Further, by controlling the position of the rear axle 22, the position of rear wheels 15 of the machine 10 can be more accurately controlled, for example as compared to where a position of a centrepoint of the machine 10 is controlled. It will be appreciated that the wheels 15 are the portions of the machine 10 that impact the ground and so precise positioning of the wheels 15 is important to ensure they impact the ground at a desired location, e.g. avoiding crops or other areas of the ground that could be damaged when driven on.

In some embodiments, obtaining or determining the acquisition path includes obtaining or determining both a front acquisition path 30a and a rear acquisition path 30b. In such embodiments, the control system 18 is configured to direct positioning of the machine 10 such that the front axle 20 (e.g. a centrepoint of the front axle) follows the front acquisition path 30a and the rear axle 22 (e.g. a centrepoint of the rear axle) follows the rear acquisition path 30b.

In some embodiments, the control system is configured to direct positioning of the front axle 20 to follow the front acquisition path 30a independently of positioning the rear axle 22 to follow the rear acquisition path 30b.

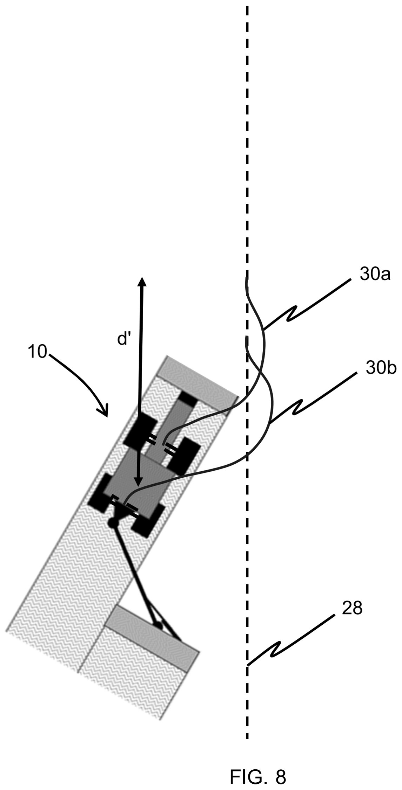

With reference to the embodiment of figure 8, the machine may be operated in 4WS. In such embodiments, the control system 18 is configured to determine a steering angle of the front wheels 14 such that the front axle 20 is positioned to track the front acquisition path 30a. The control system 18 is also configured to determine a steering angle of the rear wheels 15 such that the rear axle 22 is positioned to track the rear acquisition path 30b.

Furthermore, in this embodiment, the control system 18 is configured to determine the steering angle of the front wheels 14 independently of the steering angle of the rear wheels 15, i.e. the control system 18 is configured to determine the front steering angle independently of the rear steering angle.

Similar to the process described above in relation to the front acquisition path 30a, the control system 18 calculates a principal acquisition path and extrapolates from this a rear acquisition path 30b. This is carried out based on the dimensions of the working machine 10 using any suitable method.

In some embodiments, the principal acquisition path 30 defines a path for the machine 10 (e.g. a centre point of the machine) to follow in order to navigate to the guidance path 28. The control system 18 then uses this principal acquisition path 30 and extrapolates from this the front acquisition path 30a and the rear acquisition path 30b. This is carried out based on known dimensions of the working machine 10, using any suitable method.

In some embodiments, where positioning the front implement 24 to track the guidance path 28 is prioritised (i.e. when the implement priority input indicates that the position of the front implement 24 is to be prioritised), the control system 18 may calculate the optimal acquisition path 29a for the front implement 24 to acquire the guidance path 28.

The control system 18 then uses this front implement acquisition path 29a and extrapolates from this the front acquisition path 30a (i.e. the acquisition path 30a for the front axle to follow) and the rear acquisition path 30b (i.e. the acquisition path 30b for the rear axle to follow). In this case, the "front implement acquisition path 29a" can be notionally thought of as the "principal acquisition path". The extrapolation to determine the front and rear acquisition paths 30a,30b is carried out based on known dimensions of the working machine 10, using any suitable method.

In some embodiments, where positioning the rear implement 26 to track the guidance path 28 is prioritised (i.e. when the implement priority input indicates that the position of the rear implement 26 is to be prioritised), the control system 18 may calculate the optimal acquisition path 29b for the rear implement 26 to acquire the guidance path 28. The control system 18 then uses this rear implement acquisition path 29b and extrapolates from this the front acquisition path 30a (i.e. the acquisition path 30a for the front axle to follow) and the rear acquisition path 30b (i.e. the acquisition path 30b for the rear axle to follow). In this case, the "rear implement acquisition path 29b" can be notionally thought of as the "principal acquisition path". The extrapolation to determine the front and rear acquisition paths 30a,30b is carried out based on known dimensions of the working machine 10, using any suitable method.

In some embodiments, where positioning both the front implement 24 and rear implement 26 to respectively track the guidance path 28 is prioritised (i.e. when the implement priority input indicates that the position of both the front implement 24 and the rear implement 26 is to be prioritised), the control system 18 may calculate combined acquisition path(s).

As described in more detail above, the combined acquisition path(s) may be a single acquisition path 30, which describes the path to be followed by a centre of the machine 10. The machine can then be controlled to track the combined acquisition path 30. In some embodiments, a front acquisition path 30a, to be followed by the front axle 20, and a rear acquisition path 30b, to be followed by the rear axle 22, can be extrapolated from the central acquisition path 30. The extrapolation to determine the front and rear acquisition paths 30a,30b is carried out based on known dimensions of the working machine 10, using any suitable method.

In some embodiments, the combined paths may include a modified front implement acquisition path and a modified rear implement acquisition path. In such cases, the "principal acquisition path" may be considered to be a plurality of paths, e.g. modified front implement acquisition path and a modified rear implement acquisition path.

In some embodiments, the control system 18 uses the modified front implement acquisition path and extrapolates directly from this a front acquisition path 30a, to be followed by the front axle 20, and/or a rear acquisition path 30b, to be followed by the rear axle 22. In some embodiments, the control system 18 uses the modified rear implement acquisition path and extrapolates directly from this a front acquisition path 30a, to be followed by the front axle 20, and/or a rear acquisition path 30b, to be followed by the rear axle 22.

The extrapolation to determine the front and rear acquisition paths 30a,30b is carried out based on known dimensions of the working machine 10, using any suitable method.

Extrapolation of acquisition paths as described herein, to obtain alternative acquisition paths, can be carried out on the basis of a model of the working machine and implement(s). This model defines dimensions and relative position information, for example, the location of a pivot point between working machine and a respective implement, a position of the working point of the or each implement, a position of the front and/or rear axles of the machine 10 with respect to the pivot point, a position of an axle of the implement with respect to the pivot point, and/or any other suitable information.

The 4WS mode for guidance path acquisition enables the machine to be navigated to the guidance path 30 in a shorter distance than for 2WS. Referring to figure 6, in 2WS mode, the machine 10 is considered to have acquired the guidance path 28 once it has travelled a distance d in a direction along the guidance path 28. In contrast, with reference to figure 8, in 4WS mode, the machine is considered to have acquired the guidance path 28 once it is travelled a distance d' in a direction along the guidance path 28. By comparison of figures 6 and 8, the distance d is significantly greater than the distance d', and so more efficient manner acquisition can be achieved using 4WS. However, 2WS is typically more stable than 4WS, which may be preferable.

The process of guidance path acquisition in 4WS is similar to that described above in relation to 2WS, with the exception that an additional rear acquisition path 30b is calculated and the control system 18 is configured to direct the rear axle 22 to track the rear acquisition path 30b.

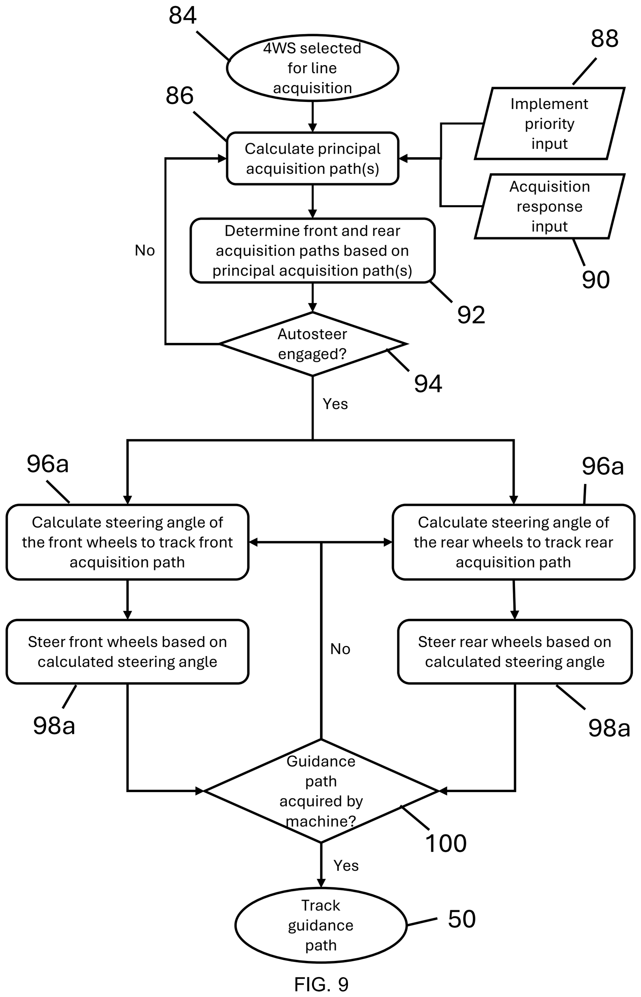

An embodiment of the process followed by the control system in 4WS guidance path acquisition is shown in figure 9. Once the 4WS mode is selected for guidance path acquisition 84, e.g. via the operator controls 17, the control system 18 calculates the principal acquisition path(s) 86. This is calculated based on an implement priority input 88 and an acquisition response input 90 received by the control system 18, in a similar manner as described above, e.g. in relation to Figure 4.

The control system 18 then determines a front acquisition path 30a and a rear acquisition path 30b based on the principal acquisition path(s) calculated 92.

As described above, the control system 18 is configured to receive a guidance path acquisition input e.g. via the operator controls 17, and the control system 18 is configured to monitor for this input when the machine is being manually driven. When the control system receives the guidance path acquisition input, this indicates a direction to engage auto-steer of the machine 94.

Once auto-steer has been engaged, the control system 18 independently controls the front wheels 14 and the rear wheels 15.

The control system 18 calculates a steering angle of the front wheels 14 required to track the front acquisition path 96a. The control system 18 then directs the front wheels of the machine to be steered based on the calculated front steering angle 98a. In this way, the control system 18 directs the position of the front axle 20 to follow the front acquisition path 30a, in order to navigate the machine 10 into position to track the guidance path 28.

Separately and independently, the control system 18 calculates a steering angle of the rear wheels 15 required to track the rear acquisition path 96b. The control system 18 then directs the rear wheels 15 of the machine to be steered based on the calculated rear steering angle 98b. In this way, the control system 18 directs the position of the rear axle 22 to follow the rear acquisition path 30b, in order to navigate the machine 10 into position to track the guidance path 28.

The control system 18 monitors for when the guidance path 28 has been acquired 100. Once the guidance path 28 has been acquired, the control system 18 directs the working machine 10 to track 50 the guidance path 28. If the guidance path 28 has not yet been acquired, the control system 18 continues to direct the working machine 10 to follow the front acquisition path 30a and rear acquisition path 30b respectively until the guidance path 28 is acquired.

The guidance path can then be tracked as described above, for example in relation to figure 5.

In this way, the control system 18 is configured to direct independently a position of the front axle 20 and a position of the rear axle 22.

In the embodiment of figure 9, the principal acquisition path(s) is calculated based on the acquisition response input 90. Accordingly the front acquisition path 30a and/or the rear acquisition path 30b extrapolated from the principal acquisition path(s) is also calculated based on the acquisition response input 90.

Similarly, in the embodiment of figure 9, the principal acquisition path(s) is calculated based on the implement priority input 88. Accordingly the front acquisition path 30a and/or the rear acquisition path 30b extrapolated from the principal acquisition path(s) is also calculated based on the implement priority input 88.

The control system 18 may include a controller. The controller may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller may include an associated memory or the memory may be located locally to the controller or remotely. The memory may be a non-volatile flash memory.

The one or more embodiments are described above by way of example only and it will be appreciated that the variations are possible without departing from the scope of protection afforded by the appended claims.

## Claims

1. A control system for a working machine, the working machine configured to be fitted with a front implement towards a front of the machine and/or a rear implement towards a rear of the machine, wherein the control system is configured to:

   obtain or determine a guidance path, wherein the guidance path defines a path to be tracked by the machine;
   obtain or determine implement information in relation to the front implement and/or the rear implement; and
   direct positioning of the machine in accordance with the implement information, in order to position the machine to track the guidance path.

2. A control system according to claim 1, wherein the implement information is indicative of a position of the front implement and/or a position of the rear implement with respect to the machine.

3. A control system according to claim 1 or 2, wherein the implement information comprises information relating to an implement priority input (e.g. a user input), wherein the implement priority input is indicative of whether a position, with respect to the guidance path, of the front implement, the rear implement, or both the front implement and the rear implement is to be prioritised, and wherein the control system is configured to receive the implement priority input; optionally wherein the control system is configured to direct positioning of the machine such that:

   a. positioning of the front implement to track the guidance path is prioritised when the implement priority input indicates that the position of the front implement is to be prioritised;
   b. positioning of the rear implement to track the guidance path is prioritised when the implement priority input indicates that the position of the rear implement is to be prioritised; and/or
   c. positioning of both the front implement and rear implement to respectively track the guidance path is prioritised when the implement priority input indicates that the position of both the front implement and rear implement is to be prioritised.

4. A control system according to any preceding claim, wherein the control system is configured to direct positioning of the machine by controlling a position of a front axle and/or rear axle of the machine, optionally wherein the control system is configured to direct independently a position of the front axle and a position of the rear axle.

5. A control system according to any preceding claim, wherein the control system is configured to:

   obtain or determine an acquisition path, wherein the acquisition path defines a path for the machine to follow in order to position the machine to track the guidance path, wherein the acquisition path is calculated in accordance with the implement information; and
to direct positioning of the machine by directing the machine to follow the acquisition path;
optionally wherein the acquisition path is calculated taking into account an optimal acquisition path for the front implement to acquire the guidance path and/or an optimal acquisition path for the rear implement to acquire the guidance path.

6. A control system according to claim 5,

wherein obtaining or determining the acquisition path comprises obtaining or determining a front acquisition path, wherein the front acquisition path defines a path for positioning a front axle of the machine, and wherein the control system is configured to direct positioning of the machine such that the front axle of the machine follows the front acquisition path; and/or
wherein obtaining or determining the acquisition path comprises obtaining or determining a rear acquisition path, wherein the rear acquisition path defines a path for positioning a rear axle of the machine, and wherein the control system is configured to direct positioning of the machine such that the rear axle of the machine follows the rear acquisition path.

7. A control system according to claim 6, wherein obtaining or determining the acquisition path comprises obtaining or determining the front acquisition path and the rear acquisition path, and wherein the control system is configured to direct positioning of the machine such that the front axle of the machine follows the front acquisition path and the rear axle of the machine follows the rear acquisition path;
optionally wherein the control system is configured to direct positioning of the front axle to follow the front acquisition path independently of positioning the rear axle to follow the rear acquisition path.

8. A control system in accordance with any of claims 5 to 7, wherein the acquisition path is calculated based on an acquisition response input (e.g. a user input), wherein the acquisition response input is indicative of a desired attribute of the acquisition path, and/or wherein the control system is configured to receive an acquisition response input, wherein the acquisition response input is indicative of desired attributes of the acquisition path, e.g. a desired acquisition path length;
optionally wherein the desired attribute comprises one or more of the following: a maximum length of the acquisition path e.g. in a direction along the guidance path, a minimum length of the acquisition path e.g. in a direction along the guidance path, a maximum radius of curvature of the acquisition path, a minimum radius of curvature of the acquisition path.

9. A control system according to claim 5 to 8, wherein the control system is configured to calculate a steering angle based on the acquisition path;

optionally wherein the control system is configured to calculate the steering angle based on one or more of the following variables:

a. a heading error determined based on a heading of the machine with respect to the acquisition path;
b. a cross-track error determined based on a lateral position of the machine with respect to the acquisition path;
c. a yaw rate error determined based on the rate of change of the machine heading error;
d. a steering angle error determined based on a steering angle of the machine with respect to the acquisition path;

optionally wherein the control system is configured to calculate the steering angle based on one or more of:

a. a heading error gain, which applies a weighting to the heading error variable;
b. a cross-track error gain, which applies a weighting to the cross-track error variable;
c. a yaw rate error gain, which applies a weighting to the yaw rate error variable;
d. steering angle error gain, which applies a weighting to the steering angle error variable;

optionally wherein one or more of the heading error gain, the cross-track error gain, the yaw rate error gain and the steering angle error gain is adjustable.

10. A control system according to claim 9, wherein the machine comprises a pair of front wheels and a pair of rear wheels, and wherein the control system is configured to determine a front steering angle of the front wheels and/or a rear steering angle of the rear wheels, such that calculating the steering angle comprises calculating the front steering angle and/or the rear steering angle, optionally wherein the front steering angle is calculated independently from the rear steering angle;

optionally wherein the control system is in accordance with claim 6 or 7 and wherein the control system is configured to calculate the front steering angle based on the front acquisition path and/or the rear steering angle based on the rear acquisition path.

11. A control system according to any preceding claim, wherein the control system is configured to direct positioning of the machine via two-wheel steer (2WS) or four-wheel steer (4WS).

12. A control system according to any preceding claim, wherein the control system is configured such that the machine is considered to be positioned to track the guidance path when the machine is positioned within a predetermined boundary with respect to the guidance path, for example a predetermined heading error boundary and/or a predetermined cross-track error boundary.

13. A control system according to any preceding claim, wherein the control system is configured such that, once the machine is considered to be positioned to track the guidance path, the control system directs the machine to track the guidance path, optionally wherein the control system is configured to receive a tracking response input (e.g. a user input), wherein the tracking response input is indicative of how closely the machine is directed to track the guidance path.

14. A control system according to any preceding claim, wherein the control system is configured to receive a guidance path acquisition input (e.g. a user input) and wherein, in response to receiving the guidance path acquisition input, the control system is configured to direct positioning of the machine in accordance with the implement information, such that the machine is positioned to track the guidance path.

15. A working machine comprising a front implement towards a front of the machine and a rear implement towards a rear of the machine, wherein the machine further comprises a control system in accordance with any preceding claim.

FIG. 1

FIG. 2

FIG. 3a

FIG. 3b

FIG. 3c

```
                                    ┌──────────────┐
                                    │    Manual    │ ─── 32
                                    │  driving of  │
                                    │   machine    │
                                    └──────────────┘
                                           │
                                           ▼
        36                          ┌──────────────┐
                                    │  Determine   │ ─── 34
   ┌──────────────┐                 │guidance path │
   │  Implement   │                 └──────────────┘
   │priority input│                        │
   └──────────────┘                        ▼
        38        ───────────▶      ┌──────────────┐
                                    │  Calculate   │ ─── 40
   ┌──────────────┐                 │acquisition path│ ◀──┐
   │ Acquisition  │                 └──────────────┘      │
   │  response    │                        │              │ No
   │   input      │                        ▼              │
   └──────────────┘                     ◇ Autosteer ◇ ────┘
                                        ◇ engaged? ◇
                                              42
                                           │ Yes
                                           ▼
   44 ───  ┌──────────────────────────────┐
           │ Calculate steering angle(s)   │ ◀──┐
           │  to track calculated          │    │
           │  acquisition path             │    │
           └──────────────────────────────┘    │
                          │                     │
                          ▼                     │ No
   46 ───  ┌──────────────────────────────┐    │
           │ Steer machine based on        │    │
           │ calculated steering           │    │
           │ angle(s)                      │    │
           └──────────────────────────────┘    │
                          │                     │
                          ▼                     │
   48 ───          ◇ Guidance ◇ ───────────────┘
                   ◇   path   ◇
                   ◇ acquired? ◇
                          │ Yes
                          ▼
   50 ───          ┌──────────────┐
                   │    Track     │
                   │  guidance    │
                   │    path      │
                   └──────────────┘
```

FIG. 4

50 — Track guidance path

52 — Autosteer engaged? — No

56 — Tracking response input

54 — Calculate steering angle(s) to track guidance path — Yes

58 — Steer machine based on calculated steering angle(s)

60 — Autosteer disengaged? — No

62 — End — Yes

FIG. 5

FIG. 6

**64**

2WS selected for line acquisition

**66**

Calculate principal acquisition path(s)

**68**

Implement priority input

**70**

Acquisition response input

**72**

Determine front acquisition path based on principal acquisition path(s)

No

**74**

Autosteer engaged?

Yes

**76**

Set the rear steering angle to zero degrees

**78**

Calculate steering angle of the front wheels to track front acquisition path

**80**

Steer machine based on calculated steering angle

No

**82**

Guidance path acquired?

Yes

**50**

Track guidance path

FIG. 7

FIG. 8

84

4WS selected
for line
acquisition

88

Implement
priority
input

86

Calculate principal
acquisition path(s)

Acquisition
response
input

90

Determine front and rear
acquisition paths based on
principal acquisition path(s)

92

No

Autosteer
engaged?

94

Yes

96a

Calculate steering angle of
the front wheels to track front
acquisition path

96a

Calculate steering angle of
the rear wheels to track rear
acquisition path

Steer front wheels based on
calculated steering angle

No

Steer rear wheels based on
calculated steering angle

98a

98a

Guidance
path
acquired by
machine?

100

Yes

Track
guidance
path

50

FIG. 9

Europäisches
Patentamt
European
Patent Office
Office européen
des brevets

# EUROPEAN SEARCH REPORT

**Application Number**

EP 25 22 4426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/084710 A1 (LAWSON JOSHUA T [US]) 29 March 2018 (2018-03-29) * paragraph [0001] * * paragraph [0015] * * paragraph [0021] - paragraph [0035] * * paragraph [0042] - paragraph [0044] * * paragraph [0049] - paragraph [0052] * * figures 1A-1C, 2, 3 * | 1-15 | INV. A01B69/04 G05D1/646 G05D1/672 |
| X | US 2009/326763 A1 (REKOW ANDREW KARL WILHELM [US] ET AL) 31 December 2009 (2009-12-31) * paragraph [0002] - paragraph [0005] * * paragraph [0044] - paragraph [0064] * * figures 1-6 * | 1-15 | |
| X | US 2024/231385 A1 (JOHNSON GERALD RAY [US]) 11 July 2024 (2024-07-11) * paragraph [0002] * * paragraph [0048] - paragraph [0049] * * paragraph [0089] - paragraph [0101] * * figures 2, 5-9 * | 1-15 | |
| A | EP 2 520 447 A1 (CNH ITALIA SPA [IT]) 7 November 2012 (2012-11-07) * paragraph [0001] * * paragraph [0020] - paragraph [0043] * * figures 1-4 * | 1-15 | TECHNICAL FIELDS SEARCHED (IPC)  A01B G05D |
| A | US 2006/142936 A1 (CNH AMERICA LLC [US]; CNH AMERICA LLC) 29 June 2006 (2006-06-29) * paragraph [0001] * * paragraph [0037] - paragraph [0042] * * figures 1-3 * | 1-15 | |

The present search report has been drawn up for all claims

| Place of search | Date of completion of the search | Examiner |
|---|---|---|
| Munich | 5 May 2026 | Nicolai, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4426

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2026

| Patent document cited in search report | Publication date | Patent family member(s) | | Publication date |
|---|---|---|---|---|
| US 2018084710 A1 | 29-03-2018 | EP | 3300562 A1 | 04-04-2018 |
| | | US | 2018084710 A1 | 29-03-2018 |
| US 2009326763 A1 | 31-12-2009 | AT | E551644 T1 | 15-04-2012 |
| | | EP | 2141565 A2 | 06-01-2010 |
| | | US | 2009326763 A1 | 31-12-2009 |
| US 2024231385 A1 | 11-07-2024 | EP | 4649000 A1 | 19-11-2025 |
| | | JP | 2025540467 A | 11-12-2025 |
| | | US | 2024231385 A1 | 11-07-2024 |
| | | WO | 2024150717 A1 | 18-07-2024 |
| EP 2520447 A1 | 07-11-2012 | BR | 102012010505 A2 | 17-10-2017 |
| | | EP | 2520447 A1 | 07-11-2012 |
| | | US | 2012283909 A1 | 08-11-2012 |
| US 2006142936 A1 | 29-06-2006 | US | 2006142936 A1 | 29-06-2006 |
| | | US | 2009276127 A1 | 05-11-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BREZAK, M** ; **PETROVIC, I**. Path Smoothing Using Clothoids for Differential Drive Mobile Robots. *Proc. of the 18th IFAC World Congress*, 2011, vol. 44 (1), 1133-1138

- **BERTOLAZZI, E** ; **FREGO, M**. *Fast and accurate G1 fitting of clothoid curves*, 2013, https:/ /www.re-searchgate.net/publ ication/237062806_Fast_and_accurate _G1_fitting_of_clothoid_curves
- **BERTOLAZZI, E** ; **FREGO, M**. G1 fitting with Clothoids. *Math. Meth. Appl. Sci.*, 2015, vol. 38, 881-897